(19) Europäisches Patentamt
European Patent Office
Office européen des brevets

(11) EP 4 585 663 A1

# (12) EUROPEAN PATENT APPLICATION

published in accordance with Art. 153(4) EPC

(43) Date of publication:
**16.07.2025 Bulletin 2025/29**

(21) Application number: **23863182.4**

(22) Date of filing: **05.09.2023**

(51) International Patent Classification (IPC):
***C09K 3/10** (2006.01)* ***B32B 27/32** (2006.01)*
***C08F 210/16** (2006.01)* ***C08J 5/18** (2006.01)*
***C08L 23/08** (2025.01)* ***C08L 23/10** (2006.01)*
***H01M 50/105** (2021.01)* ***H01M 50/119** (2021.01)*
***H01M 50/121** (2021.01)* ***H01M 50/124** (2021.01)*
***H01M 50/131** (2021.01)* ***H01M 50/134** (2021.01)*

(52) Cooperative Patent Classification (CPC):
**B32B 27/32; C08F 210/16; C08J 5/18; C08L 23/08; C08L 23/10; C09K 3/10; H01M 50/105; H01M 50/119; H01M 50/121; H01M 50/124; H01M 50/131; H01M 50/134**

(86) International application number:
**PCT/JP2023/032399**

(87) International publication number:
**WO 2024/053644 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 JP 2022140990**

(71) Applicant: **Mitsui Chemicals, Inc.**
**Tokyo 104-0028 (JP)**

(72) Inventors:
- **MIZUMA, Takahiro**
  **Ichihara-shi, Chiba 299-0108 (JP)**
- **ITAKURA, Manabu**
  **Sodegaura-shi, Chiba 299-0265 (JP)**
- **KAMIYA, Nozomi**
  **Sodegaura-shi, Chiba 299-0265 (JP)**
- **NODA, Kiminori**
  **Ichihara-shi, Chiba 299-0108 (JP)**
- **EGAWA, Makoto**
  **Ichihara-shi, Chiba 299-0108 (JP)**

(74) Representative: **Hoffmann Eitle**
**Patent- und Rechtsanwälte PartmbB**
**Arabellastraße 30**
**81925 München (DE)**

## (54) SEALANT RESIN COMPOSITION AND USE OF SAME

(57) The purpose of the present invention is to provide a sealant resin composition having excellent resistance to whitening during stretching, and good heat seal strength, as well as good heat seal strength after heat aging. The present invention relates to a sealant resin composition (X) including a 1-butene/ethylene copolymer (A) satisfying a specific requirement, and a propylene-based polymer (B), the resin composition satisfying the following requirements (X1) and (X1-2): requirement (X1): having a Shore D hardness measured in accordance with ASTM D2240 being in a range of 44 to 80; and requirement (X1-2): having a melt flow rate (MFR) measured at 230°C and a load of 2.16 kg in accordance with ASTM D1238 being 0.1 to 100 g/10 min.

EP 4 585 663 A1

## Description

Technical Field

The present invention relates to a sealant resin composition comprising a 1-butene/ethylene copolymer and a propylene-based polymer, and a use thereof.

Background Art

1-Butene-based polymers are excellent in, for example, creep characteristics at a high temperature, abrasion resistance, flexibility and compatibility with polypropylene, and are used for modification of, for example, pipe materials for water/hot water supply, sheets such as skin materials, polypropylene resins, and hotmelt adhesives.

Patent Document 1 proposes a resin modifier comprising a high-fluidity 1-butene-based polymer which has an intrinsic viscosity [η] measured at 135°C in a tetralin solvent of in a range of 0.01 to 0.5 dl/g, a melting point measured using a differential scanning calorimeter (DSC) of in a range of 0 to 100°C, and a stereoregularity index {(mmmm)/(mmrr + rmmr)} of 30 or less, as a 1-butene-based polymer having a good balance of fluidity, a tensile elastic modulus and elongation and secondary processability, and a hotmelt adhesive comprising the 1-butene-based polymer.

Patent Document 2 proposes a hotmelt adhesive comprising a 1-butene copolymer which contains ethylene-derived units at 2 to 6 wt% and has a high melt mass flow rate (MFR) of 200 to 1500 as measured in accordance with ISO 1133 (190°C, 2.16 kg).

However, when a resin composition comprising a 1-butene copolymer is used as a sealant, there is a problem that resistance to whitening during stretching in secondary processing such as deep draw forming and heat seal strength after heat aging are not sufficient.

Citation List

Patent Documents

Patent Document 1: WO03/070788
Patent Document 2: JP2017-504667A

Summary of Invention

Technical Problem

An object of the present invention is to provide a sealant resin composition having excellent resistance to whitening during stretching, and good heat seal strength, as well as good heat seal strength after heat aging.

Solution to Problem

The first present invention relates to a sealant resin composition (X) comprising a 1-butene/ethylene copolymer (A) and a propylene-based polymer (B), the resin composition satisfying the following requirement (X1):
requirement (X1): having a Shore D hardness measured in accordance with ASTM D2240 being in a range of 44 to 80.

The second present invention relates to a sealant resin composition (X) comprising a 1-butene/ethylene copolymer (A) satisfying the following requirements (A1), (A2) and (A5), and a propylene-based polymer (B), the resin composition satisfying the following requirements (X1) and (X1-2):

requirement (A1): having a content of constituent units (i) derived from 1-butene being in a range of 70 to 99.9 mol%, and a content of constituent units (ii) derived from ethylene being in a range of 0.1 to 30 mol%, provided that a total of constituent units (i) and constituent units (ii) is 100 mol%;
requirement (A2): having an isotactic pentad fraction (mmmm) calculated by $^{13}$C-NMR being in a range of 80 to 99.9%;
requirement (A5): having no observed melting peak during second temperature raising when, using a differential scanning calorimeter (DSC), the temperature is first lowered from 30°C to -70°C at a cooling rate of 20°C/min (first temperature lowering), then maintained at -70°C for 5 minutes, raised from -70°C to 200°C at a heating rate of 20°C/min (first temperature raising), maintained at 200°C for 10 minutes, then lowered to -70°C at a cooling rate of 20°C/min (second temperature lowering), maintained at -70°C for 1 minute, and then raised again from -70°C to 200°C

at a heating rate of 20°C/min (the second temperature raising);
requirement (X1): having a Shore D hardness measured in accordance with ASTM D2240 being in a range of 44 to 80; and requirement (X1-2): having a melt flow rate (MFR) measured at 230°C and a load of 2.16 kg in accordance with ASTM D1238 being in a range of 0.1 to 100 g/10 min.

The third present invention relates to an electrical storage device comprising a sealant resin composition (X), the sealant resin composition (X) comprising a 1-butene/ethylene copolymer (A) and a propylene-based polymer (B), and satisfying the following requirement (X1):
requirement (X1): having a Shore D hardness measured in accordance with ASTM D2240 being in a range of 44 to 80.

Advantageous Effects of Invention

A single-layered or multi-layered film comprising a layer formed of the resin composition according to the present invention has excellent resistance to whitening during stretching, and good heat seal strength, as well as good heat seal strength after heat aging, and can be suitably used as packages for daily necessities, food, liquid, medicaments, electronic parts and lithium ion batteries.

Description of Embodiments

<1-Butene/ethylene copolymer (A)>

A 1-butene/ethylene copolymer (A), which is one of components of a sealant resin composition (X) of the present invention, is preferably a 1-butene/ethylene copolymer (A) satisfying the following requirements (A1) to (A5). Here, the 1-butene/ethylene copolymer (A) may satisfy only one of the following requirements (A1) to (A5), satisfy two or more thereof, or satisfy all thereof. In one of preferred and exemplary aspects of the present invention, the **1-**butene/ethylene copolymer (A) satisfies the following requirements (A1), (A2) and (A5). In this aspect, the **1-**butene/ethylene copolymer (A) may further satisfy one or more requirements selected from the group consisting of the following requirement (A3) and requirement (A4), and the following requirements (A5-2) to (A8) described later.
The monomers (1-butene and ethylene) contained in the **1-**butene/ethylene copolymer (A) may be fossil fuel-derived monomers, biomass-derived monomers, or combinations of a fossil fuel-derived monomer and a biomass-derived monomer.

<Requirement (A1)>

Having a content of constituent units (i) derived from 1-butene being in a range of 70 to 99.9 mol%, and a content of constituent units (ii) derived from ethylene is in a range of 0.1 to 30 mol%, provided that a total of constituent units (i) and constituent units (ii) is 100 mol%.
In the 1-butene/ethylene copolymer (A) according to the present invention, the lower limit value of the amount of constituent units derived from 1-butene is 70 mol%. The lower limit value of the constituent units is preferably 75 mol%, more preferably 80 mol%, particularly preferably 85 mol%.
The upper limit value of the amount of constituent units derived from 1-butene is 99.9 mol%, preferably 98 mol%, more preferably 96 mol%, still more preferably 95 mol%, particularly preferably 94.5 mol%.
In the 1-butene/ethylene copolymer (A) according to the present invention, the upper limit value of the amount of constituent units (ii) derived from ethylene is 30 mol%. The upper limit value of the constituent units is preferably 25 mol%, more preferably 20 mol%, particularly preferably 15 mol%. When the 1-butene/ethylene copolymer (A) contains constituent units (ii) derived from ethylene in a certain amount or less, the resulting sealant resin composition (X) tends to easily give sealant films and laminates having sufficient resistance to whitening and excellent surface properties.
On the other hand, the lower limit value of the amount of constituent units (ii) derived from ethylene is 0.1 mol%, preferably 2 mol%, more preferably 4 mol%, still more preferably 5 mol%, particularly preferably 5.5 mol%. When the 1-butene/ethylene copolymer (A) contains constituent units (ii) derived from ethylene in a certain amount or more, the resulting sealant resin composition (X) tends to easily give sealant films and laminates having sufficient resistance to whitening and high mechanical strength.
When in the 1-butene/ethylene copolymer (A) according to the present invention, the amount of constituent units (ii) derived from ethylene is within the above-described range, it is possible to obtain good compatibility with a propylene-based polymer (B) described later. When the amount of constituent units derived from ethylene is equal to or lower than the upper limit value, use as a sealant improves resistance to whitening during stretching in secondary processing such as deep draw forming, and leads to excellent heat seal strength as well as excellent heat seal strength after heat aging, which is preferable.

The values of contents (mol%) of the constituent units forming the 1-butene/ethylene copolymer (A) are measured by $^{13}C$-NMR. Details of the measurement method are as described in Examples described later.

<Requirement (A2)>

Having an isotactic pentad fraction (mmmm) calculated by $^{13}C$-NMR being in a range of 80 to 99.9%.

The lower limit value of an isotactic pentad fraction (mmmm) of the 1-butene/ethylene copolymer (A) according to the present invention is preferably 85%, more preferably 90%. The upper limit value of the isotactic pentad fraction (mmmm) is preferably 99.5%, more preferably 99.0%. When the isotactic pentad fraction (mmmm) is in the above-described range, the copolymer can be designed to have appropriate mechanical strength and softness even if ethylene is copolymerized to control compatibility with a propylene-based polymer (B) described later.

Details of the method for measuring the isotactic pentad fraction (mmmm) are as described in Examples described later.

<Requirement (A3)>

Having an intrinsic viscosity [η] in decalin solvent at 135°C being in a range of 0.7 to 4.0 dl/g.

The intrinsic viscosity [η] of the 1-butene/ethylene copolymer (A) according to the present invention is more preferably 0.8 to 3.0 dl/g, still more preferably 0.9 to 2.5 dl/g, particularly preferably 1.0 to 2.2 dl/g. The 1-butene/ethylene copolymer (A) having the intrinsic viscosity [η] of in the above-described range is excellent in balance of fluidity and mechanical strength of the resulting sealant.

Details of a method for measuring the intrinsic viscosity [η] are as will be described in Examples below.

<Requirement (A4)>

Having a melt flow rate (MFR) measured at 190°C and a load of 2.16 kg in accordance with ASTM D1238 being 0.1 to 100 g/10 min, preferably 0.5 to 50 g/10 min, more preferably 1.0 to 30 g/10 min, still more preferably 1.1 to 20 g/10 min, even more preferably 1.1 to 5 g/10 min, particularly preferably 1.1 to 3.5 g/10 min.

When the MFR is in the above-described range, good fluidity is obtained, and the resulting sealant has good mechanical properties. For example, in the case where the sealant resin composition (X) comprising the 1-butene/ethylene copolymer is required to have high fluidity, the melt flow rate (MFR) measured at 230°C and a load of 2.16 kg in accordance with ASTM D1238 is particularly preferably in a range of 3 to 80 g/10 min. A sealant excellent in mechanical properties can be easily obtained. The MFR is particularly preferably 15 g/10 min or less in consideration of balance of fluidity appropriate to a film molding machine and mechanical properties.

When the MFR is equal to or greater than the lower limit value, a good drawdown property during film formation is obtained, thus being suitable for film formability at a high rate. When the MFR is equal to or lower than the upper limit value, the 1-butene/ethylene copolymer (A) has excellent mechanical properties, and the sealant resin composition (X) comprising the 1-butene/ethylene copolymer (A) is excellent in heat seal strength, resistance to whitening and durability, which is preferable.

<Requirement (A5)>

Having no observed melting peak during second temperature raising in calorimetry with a differential scanning calorimeter (DSC).

Calorimetry with a differential scanning calorimeter (DSC) in the present invention is performed by precisely weighing about 6 to 10 mg of a sample, hermetically enclosing the sample in an aluminum pan, first lowering the temperature to -70°C (first temperature lowering), then raising the temperature from -70°C to 200°C at a heating rate of 20°C/min (first temperature raising) to measure a DSC curve, maintaining the temperature at 200°C for 10 minutes, then lowering the temperature to -70°C at a cooling rate of 20°C/min (second temperature lowering) to measure a DSC curve, maintaining the temperature at -70°C for 1 minute, and then raising the temperature from -70°C to 200°C at a heating rate of 20°C/min again (second temperature raising) to measure a DSC curve. In exemplary aspects of the present invention, the first temperature lowering before the first temperature raising is performed by first lowering the temperature from 30°C to -70°C at a cooling rate of 20°C/min, and after the first temperature lowering, the temperature is maintained at -70°C for 5 minutes, followed by the first temperature raising.

In the case where in the DSC curve, an endothermic peak from melting (a melting peak) is observed in the first temperature raising, a temperature at which the melting peak (hereinafter, a "melting peak P1") is observed is Tm1. In the case where a melting peak is observed in the second temperature raising, a temperature at which the melting peak (hereinafter, a "melting peak P2") is observed is Tm2.

In the present invention, the phrase "no observed melting peak during second temperature raising" means that the melting peak P2 is not observed during the second temperature raising, that is, the Tm2 is not observed.

In the present specification, the melting peak is measured by the above-described measurement method, the melting point refers to a temperature at which a melting peak is observed, specifically a temperature at which a peak vertex of the melting peak exists, and the phrase "no observed melting peak " means that a crystal melting peak with a crystal melting enthalpy of 1 J/g or more is not observed. In the case where two or more melting peaks are observed, the highest of the temperatures at the peak vertexes of these peaks is the melting point.

<Requirement (A5-2)>

Along with the requirements (A1) to (A5), the 1-butene/ethylene copolymer (A) according to the present invention has a melting point (Tm) of preferably 70°C or lower, more preferably 66°C or lower as measured during first temperature raising with the differential scanning calorimeter (DSC). On the other hand, the melting point (Tm) is preferably 40°C or higher, more preferably 44°C or higher. For example, the melting point (Tm) is preferably 40 to 70°C, more preferably 44 to 66°C.

The melting point (Tm) being equal to or lower than the upper limit value leads to low crystallinity and excellent flexibility, and the melting point being equal to or higher than the lower limit value leads to excellent mechanical properties and improved heat seal strength. When the melting point (Tm) is in the above-described range, balanced and excellent softness and low-stickiness are obtained.

Here, the "melting point (Tm) measured during first temperature raising with the differential scanning calorimeter (DSC)" can be measured by the "calorimetry with the differential scanning calorimeter (DSC)" described in the "requirement (A5)" above. In this case, a temperature Tm1 at which the melting peak P1 can be observed in the first temperature raising is defined as Tm.

<Requirement (A5-3)>

Along with the requirements (A1) to (A5) (or the requirements (A1) to (A5-2)), the 1-butene/ethylene copolymer (A) according to the present invention has a melting enthalpy measured in first temperature raising with the differential scanning calorimeter (DSC) of preferably 1 to 60 J/g, more preferably 2 to 50 J/g. The melting enthalpy is an index of the crystallinity degree. The melting enthalpy being equal to or lower than the upper limit value leads to low crystallinity and excellent flexibility, and the melting enthalpy being equal to or higher than the lower limit value leads to excellent mechanical properties and improved heat seal strength. When the melting enthalpy is in the above-described range, balanced and excellent softness and low-stickiness are obtained.

Here, the "melting enthalpy measured in first temperature raising with the differential scanning calorimeter (DSC)" can be measured by the "calorimetry with the differential scanning calorimeter (DSC)" described in the "requirement (A5)" above, and a melting enthalpy determined for the melting peak P1 is defined as "melting enthalpy measured in first temperature raising with the differential scanning calorimeter (DSC)".

The fact that a melting peak is observed during first temperature raising, and a melting peak is not observed during second temperature raising although the 1-butene/ethylene copolymer (A) has crystallinity shows that the crystallization rate of the copolymer is extremely low.

<Requirement (A6)>

Along with the requirements (A1) to (A5) (or the requirements (A1) to (A5-3)), the 1-butene/ethylene copolymer (A) according to the present invention preferably

has a weight-average molecular weight (Mw) of 100,000 to 550,000 (A6).

In the case where fluidity is required, the weight-average molecular weight (Mw) of the 1-butene/ethylene copolymer (A) is more preferably 100,000 to 520,000, still more preferably 100,000 to 500,000, particularly preferably 100,000 to 490,000. When the weight-average molecular weight (Mw) is in the above-described range, the sealant resin composition comprising the 1-butene/ethylene copolymer (A) is suitable for moldability at a high rate. Nevertheless, the weight-average molecular weight (Mw) of the 1-butene/ethylene copolymer (A) may be allowed to exceed 550,000. For example, in the case where mechanical strength of the sealant is required, the weight-average molecular weight (Mw) is more preferably 150,000 to 600,000, still more preferably 200,000 to 600,000, particularly preferably 202,000 to 600,000. When the weight-average molecular weight (Mw) is in the above-described range, a sealant excellent in mechanical properties can be easily obtained.

<Requirement (A6-2)>

Further, the 1-butene/ethylene copolymer (A) according to the present invention has a molecular weight distribution (Mw/Mn) of preferably 1.5 to 3.0, and more preferably 1.6 to 2.8. Mw/Mn is a value in terms of polystyrene, which is measured by a GPC method. The 1-butene/ethylene copolymer (A) having Mw/Mn of in the above-described range is preferable because the amount of low-molecular-weight components that deteriorate mechanical strength is small and the amount of high-molecular-weight components that impair fluidity is small.

<Requirements (A7) and (A8)>

Along with the requirements (A1) to (A5) (or the requirements (A1) to (A6-2)), the 1-butene/ethylene copolymer (A) according to the present invention preferably has

a maximum value of Shore A hardness of 70 to 99 (based on ASTM D2244) (requirement (A7)), or
a maximum value of Shore D hardness of 20 to 70 (based on ASTM D2244) (requirement (A8)).

The Shore A hardness is more preferably in a range of 75 to 98. The Shore D hardness is more preferably in a range of 25 to 65. The Shore A hardness or the Shore D hardness is an index of the crystallinity degree. When the Shore A hardness or the Shore D hardness is equal to or lower than the upper limit value, crystallinity is low, and a sealant excellent in softness and resistance to whitening during stretching can be easily obtained. When the Shore A hardness or the Shore D hardness is equal to or greater than the lower limit value, a sealant excellent in mechanical properties can be easily obtained.

The 1-butene/ethylene copolymer (A) may satisfy only either of the requirement (A7) and the requirement (A8), or may satisfy both of the requirement (A7) and the requirement (A8).

<Method for producing 1-butene/ethylene copolymer (A)>

For the 1-butene/ethylene copolymer (A) according to the present invention, polymerization of a monomer in the presence of a catalyst such as Ziegler-Natta catalyst or a metallocene-based catalyst by a known polymerization method such as a gas phase method, a bulk method or a slurry method is exemplified. In particular, use of a metallocene catalyst that can uniformly control a reaction is preferable from the viewpoint that not only a resultant polymerized product has a narrow molecular weight distribution and a composition distribution, and a sealant resin composition excellent in balance of mechanical strength and softness can be obtained, but also good compatibility can be obtained particularly in the case of combination with a propylene-based polymer (B) described later. It is particularly preferable to perform polymerization using a metallocene compound represented by the following general formula (1) or (2):

[Chem. 1]

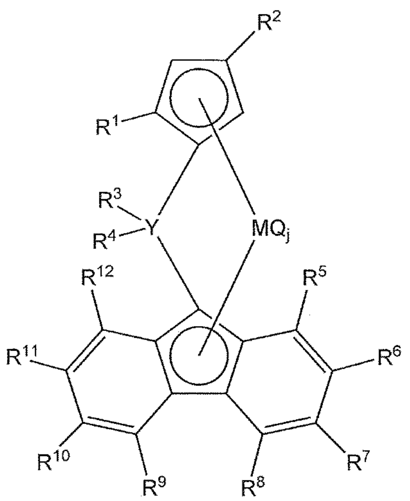

··· (1)

[Chem. 2]

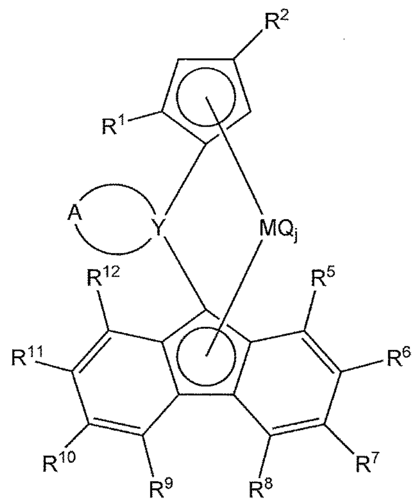

... (2)

In the general formula (1) or (2), $R^1$, $R^2$, $R^3$, $R^4$, $R^5$, $R^6$, $R^7$, $R^8$, $R^9$, $R^{10}$, $R^{11}$ and $R^{12}$ are each selected from hydrogen, a hydrocarbon group and a silicon-containing hydrocarbon group, and may be the same or different.

The hydrocarbon group is preferably an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more cyclic structures. Specific examples thereof include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl and tert-butyl.

The silicon-containing hydrocarbon group is preferably an alkylsilyl group or arylsilyl group having 1 to 4 silicon atoms and 3 to 20 carbon atoms, and specific examples thereof include trimethylsilyl, tert-butyldimethylsilyl and triphenylsilyl.

$R^2$ is preferably a sterically bulky hydrocarbon group or silicon-containing hydrocarbon group, that is, a secondary or tertiary substituent, more preferably a substituent having 4 or more carbon atoms. Specific examples of the hydrocarbon group include isopropyl, 1,1-dimethylpropyl, 1,1-diethylpropyl, 1-ethyl-1-methylpropyl, 1,1,2,2-tetramethylpropyl, sec-butyl, tert-butyl and 1,1-dimethylbutyl. tert-Butyl is particularly preferable. Examples of the silicon-containing hydrocarbon group include compounds having a structure in which part or all of carbon atoms in the compound are substituted with silicon.

The adjacent substituents $R^5$ to $R^{12}$ on the fluorene ring may be bonded to each other to form a ring. Examples of such a substituted fluorenyl group include benzofluorenyl and dibenzofluorenyl. It is preferable that the substituents $R^5$ to $R^{12}$ on the fluorene ring be left-right symmetric, that is, $R^5 = R^{12}$, $R^6 = R^{11}$, $R^7 = R^{10}$, and $R^8 = R^9$, for ease of synthesis, and more preferably, unsubstituted fluorene, 3,6-disubstituted fluorene, 2,7-disubstituted fluorene or 2,3,6,7-tetrasubstituted fluorene. Here, position 3, position 6, position 2, and position 7 on the fluorene ring correspond to $R^7$, $R^{10}$, $R^6$, and $R^{11}$, respectively.

$R^3$ and $R^4$ in the general formula (1) are each selected from hydrogen and a hydrocarbon group, and may be the same or different. Specific examples of the preferred hydrocarbon group include those that are the same as described above. Y is carbon or silicon. In the case of general formula (1), $R^3$ and $R^4$ are bonded to Y and constitute a substituted methylene group or a substituted silylene group as a bridged part. Preferred specific examples thereof include methylene, dimethylmethylene, diisopropylmethylene, methyl tert-butylmethylene, dicyclohexylmethylene, methylcyclohexylmethylene, methylphenylmethylene, diphenylmethylene, dimethylsilylene and diisopropylsilylene. Y is more preferably carbon.

When $R^2$ in the general formula (1) or (2) is a tert-butyl group, $R^1$ is preferably a methyl or ethyl group, preferably a methyl group. In this case, each of $R^3$ and $R^4$ in the general formula (1) here is a methyl or phenyl group, preferably a methyl group. $R^3$ and $R^4$ are preferably the same. Further, when $R^2$ in the general formula (1) is a tert-butyl group, and $R^1$ is a methyl group, each of $R^5$ to $R^{12}$ may be hydrogen.

Further, a compound is suitably used in which when $R^2$ in the general formula (1) is a tert-butyl group, and $R^1$ is an ethyl group, each of $R^5$, $R^7$, $R^8$, $R^9$, $R^{10}$ and $R^{12}$ is hydrogen, and each of $R^6$ and $R^{11}$ is a tert-butyl group.

In the case of general formula (2), Y is bonded to a divalent hydrocarbon group A having 2 to 20 carbon atoms, part of which may contain an unsaturated bond and/or an aromatic ring, to form, for example, a cycloalkylidene group or a cyclomethylenesilylene group. Preferred specific examples thereof include cyclopropylidene, cyclobutylidene, cyclopentylidene and cyclohexylidene.

M in the general formulae (1) and (2) is a metal selected from Group 4 of the periodic table, and examples of M

include titanium, zirconium and hafnium. Q is selected as a combination of the same or different members of a halogen, a hydrocarbon group having 1 to 20 carbon atoms, an anion ligand, and a neutral ligand capable of coordinating to a lone electron pair. Specific examples of the halogen include fluorine, chlorine, bromine and iodine, and specific examples of the hydrocarbon group include those that are the same as described above. Specific examples of the anion ligand include alkoxy groups such as methoxy, tert-butoxy and phenoxy, carboxylate groups such as acetate and benzoate, and sulfonate groups such as mesylate and tosylate. Specific examples of the neutral ligand capable of coordinating to a lone electron pair can include phosphororganic compounds such as trimethylphosphine, triethylphosphine, triphenylphosphine and diphenylmethylphosphine, and ethers such as tetrahydrofuran, diethyl ether, dioxane and 1,2-dimethoxyethane. Among them, Q may be a combination of the same or different members, and it is preferable that at least one of the Q be a halogen or an alkyl group.

A component (C) comprises at least one compound (C-3) selected from the group consisting of an organoaluminum oxy compound (C-1), a compound (C-2) that reacts with the metallocene compound (A) to form an ion pair, and an organoaluminum compound. Further, if necessary, the component (C) comprises a particulate carrier (D).

As the organoaluminum oxy compound (C-1) used, a heretofore known aluminoxane can be used as it is.

Examples of the compound (C-2) that reacts with the metallocene compound (A) to form an ion pair (hereinafter, sometimes abbreviated as "ionic compound") include Lewis acids, ionic compounds, borane compounds and carborane compounds described in, for example, JPH1-501950A and JP2004-51676A. Further, examples include heteropoly compounds and isopoly compounds.

Specific examples thereof include triphenylboron, tris(o-tryl)boron, tris(p-tryl)boron, tris(3,5-dimethylphenyl) boron, trimethylboron and triisobutylboron; compounds having a halogen-containing aryl group, such as compounds having a fluorine-containing aryl group, such as tris(4-fluorophenyl)boron, tris(3,5-difluorophenyl)boron, tris(4-fluoromethylphenyl)boron and
tris(pentafluorophenyl)boron; and trifluoroboron.

Examples of the organoaluminum compound (C-3) that forms a polymerization catalyst for olefin include organoaluminum compounds represented by the following general formula (3):

$$Ra_mAl(ORb)_nH_pQ_q \cdots \qquad (3)$$

wherein Ra and Rb may be the same as or different from each other, and each represent a hydrocarbon group having 1 to 15, preferably 1 to 4 carbon atoms, Q represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$ is satisfied.

Specific examples of such a compound include trialkyl aluminums such as trimethyl aluminum, triethyl aluminum, tri-n-butyl aluminum and triisobutyl aluminum, dialkyl aluminum hydrides such as diisopropyl aluminum hydride and diisobutyl aluminum hydride, and alkyl aluminum alkoxides such as isobutyl aluminum methoxide and isobutyl aluminum ethoxide.

The organoaluminum compound (C-3) is preferably a tri-n-alkyl aluminum such as trimethyl aluminum, triethyl aluminum or trioctyl aluminum, or a branched trialkyl aluminum such as triisobutyl aluminum, and in particular, trimethyl aluminum and triisobutyl aluminum are preferably used.

In the present invention, polymerization of the 1-butene/ethylene copolymer (A) can be performed by any of liquid-phase polymerization methods such as solution polymerization and suspension polymerization or gas-phase polymerization methods. In the liquid-phase polymerization method, an inert hydrocarbon solvent may be used, and specific examples thereof include aliphatic hydrocarbons such as propane, butane, pentane, hexane, heptane, octane and decane; alicyclic hydrocarbons such as cyclopentane, cyclohexane and methylcyclopentane; and aromatic hydrocarbons such as benzene, toluene and xylene; or mixtures thereof. Mass polymerization can also be performed in which an olefin itself, including 1-butene, is used as a solvent.

For performing polymerization, the component (A) is used in an amount of typically $10^{-8}$ to $10^{-2}$ mol, preferably $10^{-7}$ to $10^{-3}$ mol, per liter of reaction volume, in terms of a Group 4 metal atom in the periodic table. The component (C-1) is used in an amount such that the molar ratio [(C-1)/M] of the component (C-1) to a transition metal atom (M) in the component (A) is typically 0.01 to 5000, preferably 0.05 to 2000. The component (C-2) is used in an amount such that the molar ratio [(C-2)/M] of the component (C-2) to a transition metal atom (M) in the component (A) is typically 1 to 10, preferably 1 to 5. The component (C-3) is used in an amount such that the molar ratio [(C-2)/M] of the component (C-3) to a transition metal atom (M) in the component (A) is typically 10 to 5000, preferably 20 to 2000.

The polymerization temperature is in a range of typically -50 to 200°C, preferably 0 to 100°C, more preferably 20 to 100°C. An excessively low polymerization temperature tends to be industrially disadvantageous from the viewpoint of polymerization activity per unit catalyst and heat recovery efficiency.

The polymerization pressure is under conditions of typically ordinary pressure to a gauge pressure of 10 MPa, preferably ordinary pressure to a gauge pressure of 5 MPa, and the polymerization reaction can be carried out by any of batchwise, half-continuous and continuous methods. Moreover, polymerization can be performed at two or more divided

stages different in reaction conditions.

Hydrogen can be added for the purpose of controlling the molecular weight of the 1-butene/ethylene copolymer produced in polymerization or the polymerization activity, and the amount thereof is about 0.001 to 100 NL per kg of the 1-butene/ethylene copolymer (A).

<Propylene-based polymer (B)>

A propylene-based polymer (B), which is one of components contained in the sealant resin composition (X) of the present invention, is preferably a propylene-based polymer (B-1) satisfying the following requirements (B1) and (B2).

<Requirement (B1)>

Having a melting point measured by a differential scanning calorimeter of in a range of 100 to 170°C, more preferably 130 to 170°C, still more preferably 132 to 150°C.

A sealant resin composition comprising the propylene-based polymer (B) whose melting point satisfies the above-described range exhibits excellent heat resistance, and has good transparency and a moderately low crystallization rate.

<Requirement (B2)>

Having an isotactic pentad fraction (mmmm) of in a range of 80 to 99.9%, more preferably 85 to 99.9%, still more preferably 90 to 99.9%.

The sealant resin composition (X) comprising the propylene-based polymer (B) whose isotactic pentad fraction (mmmm) satisfies the above-described range has good heat seal strength.

The propylene-based polymer (B) according to the present invention preferably satisfies one or more of the following requirements (B3) and (B4), more preferably satisfies both the requirements (B3) and (B4), along with the requirements (B1) and (B2).

<Requirement (B3)>

Having a crystallization temperature of in a range of 40°C to 120°C, preferably 60 to 120°C, more preferably 80 to 120°C.

When the crystallization temperature of the propylene-based polymer (B) according to the present invention is in the above-described range, the sealant resin composition (X) comprising the propylene-based polymer (B) has good heat seal strength, which is preferable from the viewpoint of heat resistance.

For the crystallization temperature of the propylene-based polymer (B) according to the present invention, a peak temperature observed in a second temperature lowering process with a differential scanning calorimeter (DSC) is a crystallization temperature. Here, the measurement of the propylene-based polymer (B) with the differential scanning calorimeter (DSC) can be performed in the same manner as in the "calorimetry with the differential scanning calorimeter (DSC)" described in the "requirement (A5)" above, and in the case where an exothermic peak from crystallization is observed in temperature lowering (second temperature lowering) performed between the first temperature raising and the second temperature raising, a temperature at which the exothermic peak is observed is the crystallization temperature.

<Requirement (B4)>

A melt flow rate (MFR) measured at 230°C and a load of 2.16 kg is preferably in a range of 0.1 to 150 g/10 min. The melt flow rate (MFR) is in a range of more preferably 0.5 to 100 g/10 min, still more preferably 1 to 50 g/10 min, particularly preferably 2 to 25 g/10 min.

When the MFR is in the above-described range, the resulting sealant resin composition (X) has good moldability, and excellent heat seal strength.

Examples of the propylene-based polymer (B) according to the present invention include propylene homopolymers, and copolymers of propylene and at least one $\alpha$-olefin having 2 to 20 carbon atoms, other than propylene. Here, examples of the $\alpha$-olefin having 2 to 20 carbon atoms, other than propylene, include, ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene, and ethylene or an $\alpha$-olefin having 4 to 10 carbon atoms is preferable.

The copolymer of propylene and any of these $\alpha$-olefins may be a random copolymer (random polypropylene), or a block copolymer (block polypropylene). Constituent units derived from any of these $\alpha$-olefins may be contained in a proportion of 35 mol% or less, preferably 30 mol% or less, in the copolymer of the $\alpha$-olefin and propylene.

The propylene-based polymer (B) preferably comprises one or more selected from the group consisting of a random copolymer and a block copolymer. Such a propylene-based polymer (B) is preferably a random copolymer, a block copolymer, or a combination of a random copolymer and a block copolymer, more preferably a random copolymer.
The propylene-based polymer (B) may comprise one propylene-based polymer (B) alone, or a combination of two or more propylene-based polymers (B), or for example, may consist of the propylene-based polymer (B-1) satisfying the requirements (B1) and (B2), or may be a combination of the propylene-based polymer (B-1) and a propylene-based polymer (B-2) which does not satisfy one or either of the requirements (B1) and (B2).
The monomers (propylene and α-olefins other than propylene which have 2 to 20 carbon atoms) contained in the propylene-based polymer (B) may be fossil fuel-derived monomers, biomass-derived monomers, or combinations of a fossil fuel-derived monomer and a biomass-derived monomer.
The method for producing the propylene-based polymer (B) according to the present invention is not particularly limited, and examples thereof include well-known methods using a well-known catalyst such as a Ziegler-Natta-based catalyst or a metallocene-based catalyst.

<Ethylene-based polymer (C)>

The sealant resin composition (X) of the present invention may further comprise an ethylene-based polymer (C). The ethylene-based polymer (C) contains constituent units derived from ethylene at 60 to 100 mol%. Specific examples of the ethylene-based polymer (C) according to the present invention include a high-pressure low-density polyethylene (C1) and an ethylene/α-olefin copolymer (C2).
When the ethylene-based polymer (C) is used, the resulting sealant resin composition (X) can easily give sealants having, in particular, balanced and excellent impact resistance and transparency.
The monomers (ethylene and α-olefins which have 3 to 20 carbon atoms) contained in the ethylene-based polymer (C) may be fossil fuel-derived monomers, biomass-derived monomers, or combinations of a fossil fuel-derived monomer and a biomass-derived monomer.

<<High-pressure low-density polyethylene (C1)>>

As the high-pressure low-density polyethylene (C1), known high-pressure low-density polyethylene can be used without restriction. The high-pressure low-density polyethylene is polyethylene that is obtained generally by radical polymerization of ethylene at a high temperature and high pressure, and the method for production thereof is not particularly limited. Examples thereof include radical polymerization methods in which radical polymerization is performed under the conditions of, for example, 500 to 2000 atm and 150 to 300°C, and here, examples of the polymerization initiator include organic peroxides.
The high-pressure low-density polyethylene (C1) has a density of in a range of preferably 900 to 925 $kg/m^3$, more preferably 910 to 925 $kg/m^3$ as measured in accordance with ASTM D1505.
When the density is equal to or greater than the lower limit value, excellent stickiness resistance is obtained. When the density is equal to or lower than the upper limit value, excellent softness is obtained.
The high-pressure low-density polyethylene (C1) has a melt flow rate (MFR) of preferably 0.1 g/10 min or more, more preferably 0.5 g/10 min or more, particularly preferably 1.0 g/10 min or more, and preferably 50 g/10 min or less, more preferably 30 g/10 min or less, particularly preferably 20 g/10 min or less as measured under the conditions of 190°C and a load of 2.16 kg in accordance with ASTM D1238.
When the MFR is equal to or greater than the lower limit value, excellent film formability is obtained. When the MFR is equal to or lower than the upper limit value, excellent heat resistance is obtained.
The high-pressure low-density polyethylene (C1) has a melting point of preferably 104 to 130°C, more preferably 105 to 125°C, still more preferably 106 to 120°C as measured with a differential scanning calorimeter (DSC).
When the melting point is equal to or higher than the lower limit value, excellent stickiness resistance and heat resistance are obtained. When the melting point is equal to or lower than the upper limit value, excellent softness is obtained.

<<Ethylene/α-olefin copolymer (C2)>>

The ethylene/α-olefin copolymer (C2) contains at least constituent units derived from ethylene and constituent units derived from an α-olefin having 3 to 20 carbon atoms.
The content of constituent units derived from ethylene in the ethylene/α-olefin copolymer (C2) is 60 to 99 mol%, preferably 65 to 99 mol%, more preferably 70 to 99 mol%, particularly preferably 80 to 99 mol%.
When the content of ethylene is equal to or higher than the lower limit value, excellent stickiness resistance and heat resistance are obtained. When the melting point is equal to or lower than the upper limit value, excellent softness is

obtained.

The ethylene/α-olefin copolymer (C2) has a smaller number of long-chain branched structures as compared to the high-pressure low-density polyethylene (C1), and sometimes typically referred to as linear low-density polyethylene (LLDPE) .

The content of constituent units derived from an α-olefin having 3 to 20 carbon atoms in the ethylene/α-olefin copolymer (C2) is 1 to 40 mol%, preferably 1 to 35 mol%, more preferably 1 to 30 mol%, particularly preferably 1 to 20 mol%.

When the content of an α-olefin having 3 to 20 carbon atoms is equal to or greater than the lower limit value, excellent softness and impact resistance are obtained. When the content of an α-olefin having 3 to 20 carbon atoms is lower than the upper limit value, excellent stickiness resistance and heat resistance are obtained.

These contents are amounts per 100 mol% in total of constituent units derived from ethylene and an α-olefin having 3 to 20 carbon atoms.

When the content of constituent units is in the above-described range, a sealant having balanced and excellent impact resistance and softness can be easily obtained.

Examples of the α-olefin having 3 to 20 carbon atoms include propylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene and 1-eicosene. Among them, α-olefins having 3 to 10 carbon atoms are preferable, α-olefins having 3 to 8 carbon atoms are more preferable, propylene, **1-**butene and 1-octene are still more preferable, and propylene is particularly preferable.

The α-olefin having 3 to 20 carbon atoms may be used alone or in combinations of two or more thereof.

The ethylene/α-olefin copolymer (C2) may contain, in addition to the above-described constituent units, one or more kinds of constituent units derived from other polymerizable monomers as long as the purpose of the present invention is not hindered.

Examples of such other polymerizable monomers include vinyl compounds such as styrene, vinylcyclopentene, vinylcyclohexane and vinylnorbornane; vinyl esters such as vinyl acetate; unsaturated organic acids or derivatives thereof, such as maleic anhydride; and nonconjugated polyenes such as dicyclopentadiene, cyclohexadiene and 5-ethylidene-2-norbornene.

Specific examples of the ethylene/α-olefin copolymer (C2) include ethylene/propylene copolymers, ethylene/1-butene copolymers, ethylene/propylene/1-butene copolymers, ethylene/propylene/ethylidenenorbornene copolymers, ethylene/1-butene/1-octene copolymers, ethylene/4-methyl-1-pentene copolymers, ethylene/1-hexene copolymers and ethylene/1-octene copolymers. Among them, for example, ethylene/propylene copolymers and ethylene/1-butene copolymers are preferable.

The ethylene/α-olefin copolymer (C2) has a density of preferably 840 $kg/m^3$ or more, more preferably 850 $kg/m^3$ or more, particularly preferably 855 $kg/m^3$ or more, and preferably 940 $kg/m^3$ or less, more preferably 899 $kg/m^3$ or less, still more preferably 890 $kg/m^3$ or less, particularly preferably 885 $kg/m^3$ or less.

When the density is in the above-described range, a sealant resin composition having balanced and excellent impact resistance, rigidity and transparency can be easily obtained.

The density can be measured by a density-gradient tube method.

The ethylene/α-olefin copolymer (C2) has an MFR (measured at 190°C and a load of 2.16 kg in accordance with ASTM D1238) of preferably 0.01 g/10 min or more, more preferably 0.1 g/10 min or more, and preferably 40 g/10 min or less, more preferably 20 g/10 min or less, particularly preferably 10 g/10 min or less.

When the MFR is in the above-described range, a sealant resin composition having balanced and excellent impact resistance, rigidity and transparency can be easily obtained.

In the ethylene/α-olefin copolymer (C2), the ratio ($MFR_{10}/MFR_2$) between $MFR_{10}$ measured under the conditions of 190°C and a load of 10 kg and $MFR_2$ measured under the conditions of 190°C and a load of 2.16 kg in accordance with ASTM D1238 is preferably 4.0 or more, more preferably 5.0 or more, and preferably 8.0 or less, more preferably 7.0 or less.

When the $MFR_{10}/MFR_2$ is in the above-described range, a sealant resin composition having balanced and excellent transparency and impact resistance can be easily obtained.

The ethylene/α-olefin copolymer (C2) can be produced by a heretofore known method using, for example, a vanadium-based catalyst, a titanium-based catalyst or a metallocene-based catalyst. Preferably, production using a metallocene-based catalyst is more suitable from the viewpoint of mechanical properties, transparency and impact resistance because it is possible to obtain a copolymer having a narrow molecular weight distribution and composition distribution.

The ethylene/α-olefin copolymer (C2) has a melting point of preferably 30 to 100°C, more preferably 31 to 90°C, still more preferably 32 to 80°C as measured with a differential scanning calorimeter (DSC).

When the melting point is in the above-described range, a sealant resin composition having balanced and excellent transparency and impact resistance can be easily obtained.

<Sealant resin composition (X)>

The sealant resin composition (X) of the present invention comprises the 1-butene/ethylene copolymer (A) and the propylene-based polymer (B), the composition satisfying the following requirements (X1) and (X1-2).

<Requirement (X1)>

Having a Shore D hardness measured in accordance with ASTM D2240 being in a range of 44 to 80, preferably 44 to 71.

A sealant resin composition having the Shore D hardness that satisfies the above-described range forms a sealant which is soft and has good mechanical properties.

<Requirement (X1-2)>

The sealant resin composition (X) of the present invention has a melt flow rate (MFR) measured at 230°C and a load of 2.16 kg in accordance with ASTM D1238 of, although not particularly limited, for example, in a range of 0.1 to 100 g/10 min, more preferably 1 to 30 g/10 min.

When the sealant resin composition (X) of the present invention has the MFR measured at 230°C and a load of 2.16 kg being in the above-described range, good sealant formability is exhibited, and a sealant having good mechanical properties is obtained.

In particular, in the case where fluidity is required, the MFR is preferably 20 to 100 g/10 min, more preferably 20 to 50 g/10 min. However, the MFR may be preferably 3 to 80 g/10 min even in the case where high fluidity is required.

In the case where excellent mechanical strength is required, the MFR is preferably 1 g/10 min or more and less than 20 g/10 min.

If necessary, the sealant resin composition (X) of the present invention may further comprise the ethylene-based polymer (C) in addition to the 1-butene/ethylene copolymer (A) and the propylene-based polymer (B).

Examples of the sealant resin composition (X) of the present invention include a composition comprising the 1-butene/ethylene copolymer (A) and the propylene-based polymer (B), a composition comprising the 1-butene/ethylene copolymer (A), the propylene-based polymer (B) and the high-pressure low-density polyethylene (C1), a composition comprising the 1-butene/ethylene copolymer (A), the propylene-based polymer (B) and the ethylene/α-olefin copolymer (C2), and a composition comprising the 1-butene/ethylene copolymer (A), the propylene-based polymer (B), the high-pressure low-density polyethylene (C1) and the ethylene/α-olefin copolymer (C2).

Along with the (X1) and (X1-2) described above, the sealant resin composition (X) of the present invention may preferably satisfy any one of the following (X2), (X3) and (X4), or two or more thereof.

<Requirement (X2)>

Having a melting enthalpy ΔHfus of in a range of 20 to 100 J/g generated when, using a differential scanning calorimeter (DSC), the temperature is first lowered to -70°C (first temperature lowering), then raised from -70°C to 200°C at a heating rate of 20°C/min (first temperature raising), maintained at 200°C for 10 minutes, then lowered to -70°C at a cooling rate of 20°C/min (second temperature lowering), maintained at -70°C for 1 minute, and then raised again from -70°C to 200°C at a heating rate of 20°C/min (second temperature raising). In exemplary aspects of the present invention, the first temperature lowering before the first temperature raising is performed by first lowering the temperature from 30°C to -70°C at a cooling rate of 20°C/min, and after the first temperature lowering, the temperature is maintained at -70°C for 5 minutes, followed by the first temperature raising.

<Requirement (X3)>

Having a content of the 1-butene/ethylene copolymer (A) being in a range of 1 to 50 mass%, the content of the propylene-based polymer (B) being in a range of 30 to 99 mass%, and the content of the ethylene-based polymer (C) being in a range of 0 to 20 mass%, provided that a total of the 1-butene/ethylene copolymer (A), the propylene-based polymer (B) and the ethylene-based polymer (C) is 100 mass%.

<Requirement (X4)>

Having a Young's modulus (YM) measured in accordance with ASTM D638 being 1,100 MPa or less. The Young's modulus is preferably 10 to 1,100 MPa, more preferably 100 to 1,050 MPa, still more preferably 200 to 1,000 MPa. The Young's modulus is also called a tensile modulus.

When the Young's modulus is equal to or lower than the upper limit value, a sealant having excellent softness and excellent resistance to whitening during stretching can be easily obtained. When the Young's modulus is equal to or greater than the lower limit value, a sealant excellent in mechanical properties and heat resistance can be easily obtained.

In the sealant resin composition (X) of the present invention, the 1-butene/ethylene copolymer (A) contained in the sealant resin composition (X) may satisfy any one of the requirement (A1), the requirement (A2), the requirement (A3) and the requirement (A4), or two or more thereof.

Preferably, the sealant resin composition (X) of the present invention has a melting enthalpy ΔHfus measured during second temperature raising with a differential scanning calorimeter (DSC) in a range of 20 to 100 J/g, preferably 20 to 90 J/g, more preferably 30 to 85 J/g, still more preferably 35 to 80 J/g.

The melting enthalpy is an index of the crystallinity degree. When the melting enthalpy is equal to or lower than the upper limit value, a sealant having low crystallinity, excellent softness and excellent resistance to whitening during stretching can be easily obtained. When the melting enthalpy is equal to or greater than the lower limit value, a sealant excellent in mechanical properties and heat resistance can be easily obtained.

If necessary, at least one additive selected from the group consisting of heretofore known fluidity modifiers, crystal nucleating agents, antioxidants, heat-resistance stabilizers, weather-resistance stabilizers such as ultraviolet absorbers and light stabilizers, hydrochloric acid absorbers, pigments, dyes, antibacterial agents, antifungal agents, antistatic agents, lubricants, slipping agents, anti-blocking agents, antifogging agents, foaming agents, foaming auxiliaries, plasticizers such as mineral oil, and fillers can be added to the sealant resin composition (X) of the present invention as long as the purpose of the present invention is not hindered.

[Method for producing sealant resin composition (X)]

The method for producing the sealant resin composition (X) of the present invention is not particularly limited, and the sealant resin composition (X) can be prepared by, for example, a method in which the 1-butene/ethylene copolymer (A) and the propylene-based polymer (B), and the ethylene-based polymer (C) if necessary, and other optional components if necessary are mixed at the above-described blending proportion by, for example, a Henschel mixer, a V-blender, a ribbon blender, a tumbler blender or a kneader ruder, or by melt-kneading the 1-butene/ethylene copolymer (A) and the propylene-based polymer (B), and the ethylene-based polymer (C) if necessary, and other optional components if necessary by, for example, a single-screw extruder, a twin-screw extruder, a kneader or a Banbury mixer after mixing or without mixing. Further, for example, granulation and grinding may be performed if necessary.

When these components are mixed or kneaded, the components to be blended may be added at a time or step by step.

The method for the melt-kneading is not particularly limited, and it is possible to perform the melt-kneading using a melt-kneading apparatus such as an extruder which is commercially available. For example, the temperature of a portion where kneading is performed in a melt-kneading apparatus is typically 170 to 250°C, preferably 190 to 230°C. The kneading time is typically 0.5 to 30 minutes, particularly preferably 0.5 to 5 minutes.

<Sealant film>

The sealant film of the present invention is a single-layered or multi-layered sealant film comprising at least one layer containing the sealant resin composition (X) of the present invention.

For obtaining a sealant film using the sealant resin composition (X), the sealant film can be produced using a heretofore known single-layered or multi-layered film molding machine.

The sealant resin composition (X) of the present invention can be used as a sealant film in a form of a single-layered film, or in a form of a multi-layered film obtained by lamination to a base material film composed of, for example, a polyolefin resin. That is, the sealant film of the present invention may be a single-layered or multi-layered film consisting of the sealant resin composition (X) of the present invention, or may be a laminate comprising a layer composed of the sealant resin composition (X) of the present invention and a layer composed of a base material film.

Examples of the base material film composed of, for example, a polyolefin resin include single-layered or multi-layered films of, for example, a polyolefin resin (for example, polyethylene and polypropylene), a polyester resin, a polycarbonate resin, a polyarylate resin, an acrylic resin, a polyphenylene sulfide resin, a polystyrene resin, a vinyl resin, a vinyl chloride resin, a polyimide resin and an epoxy resin. In preferred and exemplary aspects of the present invention, the base material film is at least one selected from the group consisting of a polyolefin film, a polystyrene film, a polyester film, a polyamide film, a laminated film of a polyolefin and a gas barrier resin film, a metal foil such as an aluminum foil, paper, and a vapor deposition film.

A laminate comprising a layer composed of the sealant resin composition (X) of the present invention and a layer composed of a base material film can also be produced using a heretofore known single-layered or multi-layered film molding machine. The laminate can be produced by, for example, bonding a layer of the sealant film and the base material

film by one selected from the group consisting of a extrusion coating method, a thermal lamination method and a dry lamination method. In preferred and exemplary aspects of the present invention, the laminate can be obtained by a production method comprising a step of bonding a single-layered or multi-layered film consisting of a layer composed of the sealant resin composition (X) of the present invention and the base material film by one selected from the group consisting of a extrusion coating method, a thermal lamination method and a dry lamination method.

The sealant film comprising the sealant resin composition (X) of the present invention may be a stretched or an unstretched film, and is preferably an unstretched film.

The unstretched film is not particularly limited as long as it is a film that is not stretched, and for example, the shape and the size (thickness) thereof may be appropriately selected according to a desired application. The unstretched film may be single-layered or multi-layered. In the case where the film is multi-layered, at least one layer thereof may be a film comprising the sealant resin composition (X) of the present invention. That is, the unstretched film may be a single-layered or multi-layered film consisting of a layer composed of the sealant resin composition (X) of the present invention, or may be a laminate comprising a layer composed of the sealant resin composition (X) of the present invention and a layer composed of a base material.

The method for producing the unstretched film is not particularly limited as long as the purpose of the present invention is not hindered, and examples of the unstretched film include those obtained by a method in which co-extrusion is performed by a known method for molding a multi-layered film, such as a T-die film molding method or an inflation film molding method, and those obtained by a method in which a base material is formed in advance and a layer containing the sealant resin composition (X) of the present invention is further laminated on the base material. For example, the unstretched film may be obtained by a production method comprising a step of bonding a layer of a single-layered or multi-layered sealant film comprising at least one layer containing the sealant resin composition (X) (for example, a single-layered or multi-layered film consisting of a layer composed of the sealant resin composition (X) of the present invention) and a base material by one selected from the group consisting of a extrusion coating method, a thermal lamination method and a dry lamination method.

The base material is not particularly limited, and may be a metal such as an aluminum foil, a steel foil or a stainless steel foil, or may be a thermoplastic resin. The base material is in the form of a base material film in many cases, and may be, for example, any of base material films exemplified as the "base material films composed of, for example, polyolefin resin" above, or a metal foil such as an aluminum foil. In the case where the unstretched film is multi-layered, the term "unstretched" means that none of the layers thereof are stretched.

The thickness of the unstretched film (total thickness in the case of a multi-layered film) is preferably 5 μm or more, more preferably 10 μm or more, still more preferably 20 μm or more, and preferably 150 μm or less, more preferably 130 μm or less, still more preferably 100 μm or less.

In the present specification, a film and a sheet are not expressly distinguished from each other, and typically, the film refers to a film-shaped material having a thickness of less than 250 μm, whereas the sheet refers to a thin plate-shaped material having a thickness of 250 μm or more.

Examples of the specific application of the unstretched film include packaging films for packaging, for example, food, liquid, medicaments and electronic parts, and packaging materials obtained therefrom.

<Use of sealant film>

The sealant film of the present invention and a laminate obtained by laminating the sealant film and a base material film (for example, a single-layered or multi-layered sealant film consisting of a layer composed of the sealant resin composition (X) and a laminate comprising a layer composed of the sealant resin composition (X) and a layer composed of a base material film) can be suitably used as packages for any articles such as daily necessities, food (food packaging materials), liquid, medicaments, electronic parts and construction materials by taking advantages of characteristics as a sealant film. The sealant film and the laminate may be contained in electrical storage devices such as lithium ion batteries and lithium ion capacitors, and can be suitably used as, for example, a package for lithium ion batteries. From a different angle, it can be said that the present invention provides an electrical storage device comprising the sealant resin composition (X). Examples of the electrical storage device include electrical storage devices comprising the sealant film or the laminate, and specific examples thereof include packages for lithium ion batteries comprising the sealant film or the laminate.

A lithium ion battery typically includes a positive electrode, a negative electrode, a separator between the positive electrode and the negative electrode, and a non-aqueous electrolytic solution. The positive electrode normally contains a positive electrode current collector composed of a metal material or a carbon material, and, as a positive electrode active material, a positive electrode material capable of occluding and releasing lithium, such as a composite oxide containing lithium and a transition metal. The negative electrode normally contains a negative electrode current collector composed of a carbon material, and, as a negative electrode active material, a negative electrode material capable of occluding and releasing lithium ions, such as metal lithium, a lithium-containing alloy, or a metal or an alloy capable of alloying with lithium.

The non-aqueous electrolytic solution contains a lithium salt as an electrolyte, and a non-aqueous solvent. In the lithium ion battery, the positive electrode, the negative electrode and the separator are impregnated with the non-aqueous electrolytic solution. Details of the non-aqueous solvent are described in the section "Non-aqueous solvent" below.

In many cases, the lithium ion battery includes a package (package for lithium ion batteries) on the peripheral edge thereof, and encapsulates the positive electrode, the negative electrode, the separator and the non-aqueous electrolytic solution inside the package. Here, normally, a positive electrode terminal and a negative electrode terminal are connected to the positive electrode and the negative electrode, respectively, and a part of the positive electrode terminal and a part of the negative electrode terminal are exposed on the outside of the package.

In the case where the sealant film or the laminate of the present invention is used as the package, a lithium ion battery is obtained by sandwiching the positive electrode and the negative electrode between a pair of sealant films or a pair of laminates, and heat-sealing the peripheral edge portions of the pair of sealant films or the pair of laminates such that a part of the positive electrode terminal and a part of the negative electrode terminal are exposed on the outside of the pair of sealant films or the pair of laminates. Here, in the case where the laminate of the present invention is used as the package, the laminate may comprise a base material composed of a metal, such as an aluminum foil.

Lithium ion batteries with a package for lithium ion batteries can be used for, for example, handheld electronic devices, personal computers, robots, drones, automobiles, aircrafts, wearable devices, and electrical storage systems (ESSs) for household use or for renewable energy power generation.

<Non-aqueous solvent>

A non-aqueous electrolytic solution for lithium ion batteries typically contains a non-aqueous solvent.

As the non-aqueous solvent, various known non-aqueous solvents can be appropriately selected. It is preferable to use at least one selected from the group consisting of cyclic aprotic solvents and chain aprotic solvents.

It is preferable to use a cyclic aprotic solvent as the non-aqueous solvent in the case where it is intended that the flame point of the solvent is raised for improving the safety of batteries.

(Cyclic aprotic solvent)

As the cyclic aprotic solvent, cyclic carbonate, cyclic carboxylic acid ester, cyclic sulfone and cyclic ether can be used.

The cyclic aprotic solvents may be used singly, or in mixture of two or more thereof. The mixing amount of the cyclic aprotic solvent in the non-aqueous solvent is 10 mass% to 100 mass%, more preferably 20 mass% to 90 mass%, particularly preferably 30 mass% to 80 mass%. Selection of such an amount can enhance the conductivity of an electrolytic solution which is related to the charge/discharge characteristics of batteries.

Specific examples of the cyclic carbonate include ethylene carbonate, propylene carbonate, 1,2-butylene carbonate, 2,3-butylene carbonate, 1,2-pentylene carbonate, and 2,3-pentylene carbonate. Of these, ethylene carbonate and propylene carbonate having a high dielectric constant are suitably used. In the case of batteries in which graphite is used for a negative electrode active material, ethylene carbonate is more preferable. These cyclic carbonates may be used in mixture of two or more thereof.

Specific examples of the cyclic carboxylic acid ester include γ-butyrolactone, δ-valerolactone, or alkyl substitution products such as methyl-γ-butyrolactone, ethyl-γ-butyrolactone and ethyl-δ-valerolactone.

The cyclic carboxylic acid ester has a low vapor pressure, a low viscosity and a high dielectric constant, and can decrease the viscosity of an electrolytic solution without lowering the flame point of the electrolytic solution and the dissociation degree of the electrolytic solution. Thus, the cyclic carboxylic acid ester has a characteristic that the conductivity of an electrolytic solution which is an index related to the charge/discharge characteristics of the battery can be enhanced without increasing the inflammability of the electrolytic solution. For this reason, it is preferable to use a cyclic carboxylic acid ester as the cyclic aprotic solvent in the case where it is intended that the flame point of the solvent is raised. γ-Butyrolactone is most preferable.

It is preferable that the cyclic carboxylic acid ester be used in mixture with other cyclic aprotic solvents. An example is a mixture of the cyclic carboxylic acid ester and cyclic carbonate and/or chain carbonate.

Specific examples of the combination of the cyclic carboxylic acid ester and cyclic carbonate and/or chain carbonate include γ-butyrolactone and ethylene carbonate; γ-butyrolactone, ethylene carbonate and dimethyl carbonate; γ-butyrolactone, ethylene carbonate and methyl ethyl carbonate; γ-butyrolactone, ethylene carbonate and diethyl carbonate; γ-butyrolactone and propylene carbonate; γ-butyrolactone, propylene carbonate and dimethyl carbonate; γ-butyrolactone, propylene carbonate and methyl ethyl carbonate; γ-butyrolactone, propylene carbonate and diethyl carbonate; γ-butyrolactone, ethylene carbonate and propylene carbonate; γ-butyrolactone, ethylene carbonate, propylene carbonate and dimethyl carbonate; γ-butyrolactone, ethylene carbonate, propylene carbonate and methyl ethyl carbonate; γ-butyrolactone, ethylene carbonate, propylene carbonate and diethyl carbonate; γ-butyrolactone, ethylene

carbonate, dimethyl carbonate and methyl ethyl carbonate; γ-butyrolactone, ethylene carbonate, dimethyl carbonate and diethyl carbonate; γ-butyrolactone, ethylene carbonate, methyl ethyl carbonate and diethyl carbonate; γ-butyrolactone, ethylene carbonate, dimethyl carbonate, methyl ethyl carbonate and diethyl carbonate; γ-butyrolactone, ethylene carbonate, propylene carbonate, dimethyl carbonate and methyl ethyl carbonate; γ-butyrolactone, ethylene carbonate, propylene carbonate, dimethyl carbonate and diethyl carbonate; γ-butyrolactone, ethylene carbonate, propylene carbonate, methyl ethyl carbonate and diethyl carbonate; γ-butyrolactone, ethylene carbonate, propylene carbonate, dimethyl carbonate, methyl ethyl carbonate and diethyl carbonate; γ-butyrolactone and sulfolane; γ-butyrolactone, ethylene carbonate and sulfolane; γ-butyrolactone, propylene carbonate and sulfolane; γ-butyrolactone, ethylene carbonate, propylene carbonate and sulfolane; and γ-butyrolactone, sulfolane and dimethyl carbonate.

Examples of the cyclic sulfone include sulfolane, 2-methylsulfolane, 3-methylsulfolane, dimethyl sulfone, diethyl sulfone, dipropyl sulfone, methyl ethyl sulfone, and methyl propyl sulfone.

Examples of the cyclic ether include dioxolane.

(Chain aprotic solvent)

As the chain aprotic solvent, for example, chain carbonate, chain carboxylic acid ester, chain ether, and chain phosphoric acid ester can be used.

The mixing amount of the chain aprotic solvent in the non-aqueous solvent is 10 mass% to 100 mass%, more preferably 20 mass% to 90 mass%, particularly preferably 30 mass% to 80 mass%.

Specific examples of the chain carbonate include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, and methyl trifluoroethyl carbonate. These chain carbonates may be used in mixture of two or more thereof.

Specific examples of the chain carboxylic acid ester include methyl pivalate. Specific examples of the chain ether include dimethoxy ethane.

Specific examples of the chain phosphoric acid ester include trimethyl phosphate.

(Combination of solvents)

The non-aqueous electrolytic solution may contain non-aqueous solvents singly, or two or more thereof.

One or more kinds of only the cyclic aprotic solvent may be used, one or more kinds of only the chain aprotic solvent may be used, or the cyclic aprotic solvent and the chain protic solvent may be used in mixture. It is preferable to use the cyclic aprotic solvent and the chain aprotic solvent in combination as the non-aqueous solvent in the case where in particular, improvement of the load characteristics and low temperature characteristics of batteries is intended.

Further, from the viewpoint of the electrochemical stability of an electrolytic solution, it is most preferable to apply cyclic carbonate to the cyclic aprotic solvent and apply chain carbonate to the chain aprotic solvent. The conductivity of an electrolytic solution which is related to the charge/discharge characteristics of batteries can also be enhanced by combination of a cyclic carboxylic acid ester and cyclic carbonate and/or chain carbonate.

Specific examples of the combination of cyclic carbonate and chain carbonate include ethylene carbonate and dimethyl carbonate; ethylene carbonate and methyl ethyl carbonate; ethylene carbonate and diethyl carbonate; propylene carbonate and dimethyl carbonate; propylene carbonate and methyl ethyl carbonate; propylene carbonate and diethyl carbonate; ethylene carbonate, propylene carbonate and methyl ethyl carbonate; ethylene carbonate, propylene carbonate and diethyl carbonate; ethylene carbonate, dimethyl carbonate and methyl ethyl carbonate; ethylene carbonate, dimethyl carbonate and diethyl carbonate; ethylene carbonate, methyl ethyl carbonate and diethyl carbonate; ethylene carbonate, dimethyl carbonate, methyl ethyl carbonate and diethyl carbonate; ethylene carbonate, propylene carbonate, dimethyl carbonate and methyl ethyl carbonate; ethylene carbonate, propylene carbonate, dimethyl carbonate and diethyl carbonate; ethylene carbonate, propylene carbonate, methyl ethyl carbonate and diethyl carbonate; and ethylene carbonate, propylene carbonate, dimethyl carbonate, methyl ethyl carbonate and diethyl carbonate.

The mixing ratio of the cyclic carbonate and the chain carbonate (cyclic carbonate : chain carbonate) is 5 : 95 to 80 : 20, more preferably 10 : 90 to 70 : 30, on a mass basis. Selection of such a ratio can suppress an increase in viscosity of an electrolytic solution and enhance the dissociation degree of an electrolyte, so that it is possible to enhance the conductivity of the electrolytic solution which is related to the charge/discharge characteristics of batteries. The solubility of the electrolyte can be further enhanced. Therefore, an electrolytic solution excellent in electrical conductivity at normal temperature or a low temperature can be obtained, so that it is possible to improve the load characteristics of batteries at normal to low temperature.

A lithium ion battery includes a non-aqueous electrolytic solution containing the non-aqueous solvent. From this,

a package for forming a lithium ion battery (package for lithium ion batteries) is required to be hardly dissolved in the non-aqueous solvent or swollen with the non-aqueous solvent, and also required to be capable of maintaining certain mechanical strength even when caused to come into contact with the non-aqueous solvent. The sealant film and the laminate of the present invention comprising the sealant resin composition (X) has excellent resistance to whitening, is hardly dissolved in the non-aqueous solvent or swollen with the non-aqueous solvent, can maintain certain mechanical strength even when caused to come into contact with the non-aqueous solvent, and can be suitably used as a package for lithium ion batteries.

EXAMPLES

Hereinafter, the present invention will be more specifically described on the basis of examples. However, the present invention is not limited to these examples at all.

The polymers used in Examples and Comparative Examples are shown below.

[1-Butene/ethylene copolymer (A)]

1-Butene/ethylene copolymers (A-1) to (A-6) obtained in Production Examples described later were used.

(A-1); 1-Butene/ethylene copolymer (ethylene content: 14.6 mol%, MFR (190°C, 2.16 kg load): 3.0 g/10 min, intrinsic viscosity [η]: 1.72 dl/g, mmmm fraction: 95.9%)
(A-2); 1-Butene/ethylene copolymer (ethylene content: 14.3 mol%, MFR (190°C, 2.16 kg load): 1.1 g/10 min, intrinsic viscosity [η]: 2.14 dl/g, mmmm fraction: 96.2%)
(A-3); 1-Butene/ethylene copolymer (ethylene content: 12.2 mol%, MFR (190°C, 2.16 kg load): 3.3 g/10 min, intrinsic viscosity [η]: 1.68 dl/g, mmmm fraction: 94.6%)
(A-4); 1-Butene/ethylene copolymer (ethylene content: 10.1 mol%, MFR (190°C, 2.16 kg load): 3.0 g/10 min, intrinsic viscosity [η]: 1.68 dl/g, mmmm fraction: 93.6%)
(A-5); 1-Butene/ethylene copolymer (ethylene content: 8.1 mol%, MFR (190°C, 2.16 kg load): 3.1 g/10 min, intrinsic viscosity [η]: 1.65 dl/g, mmmm fraction: 92.8%)
(A-6); 1-Butene/ethylene copolymer (ethylene content: 5.7 mol%, MFR (190°C, 2.16 kg load): 3.0 g/10 min, intrinsic viscosity [η]: 1.66 dl/g, mmmm fraction: 92.3%)

[Propylene-based polymer (B)]

As a propylene-based polymer (B), random polypropylene (manufactured by Prime Polymer Co., Ltd., trade name: Prime Polypro F327, MFR (230°C, 2.16 kg load): 7 g/10 min, melting point: 140°C, crystallization temperature: 93°C, mmmm: 95.3%) (B-1) was used.

[Ethylene-based polymer (C)]

As an ethylene-based polymer (C),

high-pressure low-density polyethylene (manufactured by DOW-MITSUI POLYCHEMICALS CO., LTD., trade name: MIRASON 11P, MFR (190°C, 2.16 kg load): 7.2 g/10 min, density: 0.917 g/$cm^3$ (917 kg/$m^3$), melting point: 108°C) (C-1), or
an ethylene/propylene copolymer (MFR (190°C, 2.16 kg load): 0.6 g/10 min, density: 0.869 g/$cm^3$ (869 kg/$m^3$), propylene content: 19 mol%, melting point: 40°C) (C-2) was used.

[Other components]

As another component, a propylene/ethylene copolymer (ethylene content: 20.6 mol%, MFR (190°C, 2.16 kg load): 1.4 g/10 min, melting point: 44°C) (PER) was used.

<<Example of production of 1-butene/ethylene copolymer (A) >>

[Production Example 1]

n-Hexane was supplied at a rate of 14.2 L/h to a supply port of a continuous polymerization vessel having a volume of 300 liters, and a solution of a mixture of isopropylidene(3-tert-butyl-5-methylcyclopentadienyl-fluorenyl)

zirconium dichloride (main catalyst 1), modified methylaluminoxane and triisobutylaluminum in hexane (concentration of main catalyst 1) in terms of zirconium: 0.5 mmol/liter, concentration of modified methylaluminoxane in terms of aluminum: 4 mmol/L, concentration of triisobutylaluminum in terms of aluminum: 100 mmol/L) was continuously supplied at a rate of 0.22 L/h through another supply port (hexane in total: 10 L/h). At the same time, 1-butene, ethylene and hydrogen were supplied at rates of 27 kg/h, 1.0 kg/h and 0.6 NL/h, respectively, through another supply port of the polymerization vessel, and continuous solution polymerization was performed under the conditions of a polymerization temperature of 60°C, a polymerization pressure of 0.8 MPaG and a retention time of 1.5 hours, to give a 1-butene/ethylene copolymer (A-1).

[Production Example 2]

A 1-butene/ethylene copolymer (A-2) was produced in the same manner as in the production method of Production Example 1 except that the amounts of 1-butene, ethylene and hydrogen supplied were adjusted to 27 kg/h, 0.9 kg/h and 0.1 NL/h, respectively.

[Production Example 3]

A 1-butene/ethylene copolymer (A-3) was produced in the same manner as in the production method of Production Example 1 except that the amounts of 1-butene, ethylene and hydrogen supplied were adjusted to 27 kg/h, 0.8 kg/h and 0.6 NL/h, respectively.

[Production Example 4]

A 1-butene/ethylene copolymer (A-4) was produced in the same manner as in the production method of Production Example 1 except that the amounts of 1-butene, ethylene and hydrogen supplied were adjusted to 27 kg/h, 0.7 kg/h and 0.7 NL/h, respectively.

[Production Example 5]

A 1-butene/ethylene copolymer (A-5) was produced in the same manner as in the production method of Production Example 1 except that the amounts of 1-butene, ethylene and hydrogen supplied were adjusted to 27 kg/h, 0.6 kg/h and 0.7 NL/h, respectively, and the polymerization pressure was changed to 0.7 MPaG.

[Production Example 6]

A 1-butene/ethylene copolymer (A-6) was produced in the same manner as in the production method of Production Example 1 except that the amounts of 1-butene, ethylene and hydrogen supplied were adjusted to 27 kg/h, 0.4 kg/h and 0.6 NL/h, respectively, and the polymerization pressure was changed to 0.6 MPaG.
The properties of 1-butene/ethylene copolymers (A) obtained in Production Examples were measured by the following methods. Table 1 shows the results.

[Table 1]

**Table 1**

| | | Production Example 1 | Production Example 2 | Production Example 3 | Production Example 4 | Production Example 5 | Production Example 6 |
|---|---|---|---|---|---|---|---|
| | | A-1 | A-2 | A-3 | A-4 | A-5 | A-6 |
| Amount of 1-butene supplied | kg/h | 27 | 27 | 27 | 27 | 27 | 27 |
| Amount of ethylene supplied | kg/h | 1.0 | 0.9 | 0.8 | 0.7 | 0.6 | 0.4 |
| Amount of hydrogen supplied | NL/h | 0.6 | 0.1 | 0.6 | 0.7 | 0.7 | 0.7 |

(continued)

| | | Production Example 1 | Production Example 2 | Production Example 3 | Production Example 4 | Production Example 5 | Production Example 6 |
|---|---|---|---|---|---|---|---|
| | | A-1 | A-2 | A-3 | A-4 | A-5 | A-6 |
| Polymerization pressure | MPaG | 0.8 | 0.8 | 0.8 | 0.8 | 0.7 | 0.6 |
| C2 content | mol% | 14.6 | 14.3 | 12.2 | 10.1 | 8.1 | 5.7 |
| MFR(190°C,2.16 kg load) | g/10min | 3.0 | 1.1 | 3.3 | 3.0 | 3.1 | 3.0 |
| mmmm | % | 95.9 | 96.2 | 94.6 | 93.6 | 92.8 | 92.3 |
| [η] | dl/g | 1.72 | 2.14 | 1.68 | 1.68 | 1.65 | 1.66 |
| Mw | - | 366,000 | 490,000 | 343,000 | - | - | 360,000 |
| Mw/Mn | - | 2.10 | 2.13 | 2.11 | - | - | 2.08 |
| Melting point (1st) | °C | 49 | 47 | 51 | 55 | 60 | 65 |
| Melting enthalpy (1st) | J/g | 22 | 19 | 25 | 29 | 31 | 32 |
| Melting point (2nd) | °C | n.a | n.a | n.a | n.a | n.a | n.a |
| Melting enthalpy (2nd) | J/g | n.a | n.a | n.a | n.a | n.a | n.a |
| Yield stress | MPa | 3.2 | 2.8 | 4.0 | 5.1 | 5.4 | 5.1 |
| Strength at break | MPa | 28 | 27 | 30 | 33 | 35 | 38 |
| Elongation at break | % | 777 | 795 | 732 | 660 | 594 | 539 |
| Young's modulus | MPa | 65 | 56 | 85 | 113 | 136 | 144 |
| Shore A | - | 85 | 89 | 92 | 93 | 95 | 94 |
| Shore D | - | - | - | 33 | 38 | 40 | 40 |

[Contents of 1-butene and ethylene in 1-butene/ethylene copolymer (A)]

For quantification of the contents of 1-butene and ethylene, measurement was performed as follows using a nuclear magnetic resonance apparatus AVANCE cryo-500 model manufactured by Bruker BioSpin. A mixed solvent of o-dichlorobenzene/deuterated benzene (volume ratio: 80/20) was used as a solvent, the sample concentration was 20 mg/0.6 mL, the measurement temperature was 120°C, observation angle was $^{13}C$ (125 MHz), the sequence was single-pulse proton broad-band decoupling, the pulse width was 4.7 μsec (45° pulse), the repetition time was 5.5 sec, the number of scans was 128, and the chemical shift reference value was 27.50 ppm in terms of a carbon signal of the methylene group on the butene side chain. From the obtained $^{13}C$-NMR spectrum, the composition of 1-butene (C4 content; mol%) and ethylene (C2 content; mol%) was quantified.

[MFR of 1-butene/ethylene copolymer (A)]

MFR was measured at 190°C and a load of 2.16 kg in accordance with ASTM D1238.

[Measurement of isotactic pentad fraction (mmmm)]

Where the chemical shift of a peak top attributed to a pentad represented by mmmm (pentad isotacticity) was assumed to be 27.5 ppm, the peak area S with a peak top at 27.5 ppm and the total area S' of peaks appearing in a range from 27.3 ppm to 26.3 ppm were determined, and the pentad isotacticity (mmmm) of the 1-butene/ethylene copolymer (A) was calculated from the following equation (the detection limit was set to be 0.01%).

$$(mmmm) = S/(S + S') \times 100\ (\%)$$

Here, major peaks appearing in a range from 27.3 ppm to 26.3 ppm were peaks attributed to mmmr (27.3 ppm), mmrr and rmmr (27.2 ppm) and mrrm (26.3 ppm).

[Intrinsic viscosity [η] (dl/g)]

The 1-butene/ethylene copolymer (A) is a value measured at 135°C in a decalin solvent using an Ubellohde's viscometer. About 20 mg of polymerized powder, and pellets or resin mass were taken, and dissolved in 15 mL of decalin, and the specific viscosity ηsp was measured in an oil bath heated to 135°C. 5 mL of a decalin solvent was added to this decalin solution for dilution, and then the specific viscosity ηsp was measured in the same manner. This dilution operation was repeated twice more, and the value of ηsp/C when the concentration (C) was extrapolated to 0 was determined as an intrinsic viscosity [η].

$$[\eta] = \lim\ (\eta sp/C)$$

$(C \rightarrow 0)$

[Weight-average molecular weight (Mw) and molecular weight distribution (Mw/Mn)]

By use of a gel permeation chromatograph Alliance GPC-2000 model manufactured by Waters Corporation as a GPC apparatus, Mw and Mn in terms of polystyrene was measured under the following conditions, and Mw/Mn was calculated.

Separation column: Two columns of TSKgel GNH6-HT manufactured by Tosoh Corporation and two columns of TSKgel GNH6-HTL manufactured by Tosoh Corporation (each of the columns has a size of 7.5 mm in diameter and 300 mm in length).
Column temperature: 140°C
Mobile phase: o-Dichlorobenzene (manufactured by FUJIFILM Wako Pure Chemical Corporation) containing BHT (manufactured by Takeda Pharmaceutical Company Limited) at 0.025 wt% as an antioxidant
Movement rate: 1.0 mL/min
Sample concentration: 15 mg/10 mL
Sample injection volume: 400 μL
Detector: Differential refractometer
Standard polystyrene: A product manufactured by Tosoh Corporation was used when the molecular weight was $Mw < 1000$ and $Mw > 4 \times 10^6$, and a product manufactured by Pressure Chemical Co. was used when the molecular weight was $1000 \leq Mw \leq 4 \times 10^6$.

[Press molding conditions]

A pressed sheet prepared under the following conditions was stored at room temperature for 10 days or more, and used for a test. In the following test, the pressed sheet stored at room temperature for 10 days or more was used as a specimen or a specimen for mechanical properties.

Pressing machine: manufactured by KANSAI ROLL Co., Ltd. (model: PEWE-70/50 35)
Remaining heat time: 4 min
Remaining heat and pressurization temperature: 120°C
Pressure: 10 MPa
Pressurization time: 3 min
Cooling rate: 40°C/min (Pressurization at 10 MPa for 4 minutes with another pressing machine set at 20°C, followed by cooling to room temperature)

[Melting point and melting enthalpy]

The melting point and the melting enthalpy ΔHfus (1st, 2nd) were measured by the above-described measurement method (that is, the measurement method described in the section "Requirement (A5)" above).
That is, calorimetry on polymers such as 1-butene/ethylene copolymers (A) with a differential scanning

calorimeter (DSC) was performed by precisely weighing about 6 to 10 mg of a sample, hermetically enclosing the sample in an aluminum pan, first lowering the temperature to -70°C (first temperature lowering), then raising the temperature from -70°C to 200°C at a heating rate of 20°C/min (first temperature raising) to measure a DSC curve, maintaining the temperature at 200°C for 10 minutes, then lowering the temperature to -70°C at a cooling rate of 20°C/min (second temperature lowering) to measure a DSC curve, maintaining the temperature at -70°C for 1 minute, and then raising the temperature from -70°C to 200°C at a heating rate of 20°C/min again (second temperature raising) to measure a DSC curve. Here, the first temperature lowering before the first temperature raising was performed by first lowering the temperature from 30°C to -70°C at a cooling rate of 20°C/min, and after the first temperature lowering, the temperature was maintained at -70°C for 5 minutes, followed by the first temperature raising.

Here, DSC measurement on polymers such as 1-butene/ethylene copolymers (A) was performed using X-DSC 7000 (differential scanning calorimeter, manufactured by Hitachi High-Tech Science Corporation).

In the case where in the DSC curve, an endothermic peak from melting (a melting peak) was observed in the first temperature raising, a temperature at which the melting peak (hereinafter, a "melting peak P1") was observed, specifically a temperature at a peak vertex of the "melting peak P1", was defined as Tm1 or a "melting point (1st)". In the case where a melting peak was observed in the second temperature raising, a temperature at which the melting peak (hereinafter, a "melting peak P2") was observed, specifically a temperature at a peak vertex of the "melting peak P2", was defined as Tm2 or a "melting point (2nd)". Here, in the case where two or more melting peaks were observed for each of the "melting peak P1" and the "melting peak P2", the highest of the temperatures at the peak vertexes of these peaks was the melting point.

In the case where in the DSC curve, the "melting peak P1" was present, a melting enthalpy determined for the melting peak P1 was defined as ΔHfus (1st) or a "melting enthalpy (1st)". Similarly, in the case where the "melting peak P2" was present, a melting enthalpy determined for the melting peak P2 was defined as ΔHfus (2nd) or a "melting enthalpy (2nd)".

In the case where a crystal melting peak with a crystal melting enthalpy of 1 J/g or more was not observed as the "melting peak P1" or "melting peak P2", the determination of "no melting peak observed" or "n.a." was made.

[Mechanical properties (normal temperature)]

The yield stress, the strength at break (TS), the elongation at break (chuck-to-chuck, EL) and the Young's modulus (YM) for the specimen for mechanical properties were measured in accordance with JIS K 6251 (measurement temperature: 23°C, tension speed = 200 mm/min, maximum strain = 800%). The stress of a specimen that was not broken at strain = 800% was defined as TS.

[Shore A hardness (momentary value) and Shore D hardness]

With an A-type instrument, an indentation needle was brought into contact with the specimen, and immediately thereafter, a scale was read, and taken as a Shore A hardness (in accordance with ASTM D2240).

With a D-type instrument, an indentation needle was brought into contact with the specimen, and immediately thereafter, a scale of the maximum value was read, and taken as a Shore D hardness (in accordance with ASTM D2240).

In press molding, a 100 μm-thick release PET film (manufactured by Toray Industries, Inc., trade name: Lumirror) was used as a release film.

Properties of the sealant resin compositions prepared in Examples and Comparative Examples were measured by the following methods. Tables 2-1 and 2-2 show the results.

[Melting point and melting enthalpy (sealant resin composition)]

The melting point and the melting enthalpy ΔHfus (2nd) were measured by the above-described measurement method (that is, the measurement method described in the section "Requirement (X2)" above).

That is, the melting point and the melting enthalpy of the sealant resin composition (X) was measured by DSC measurement. The DSC measurement was performed in the same manner as described in "Melting point and melting enthalpy" above using X-DSC 7000 (differential scanning calorimeter, manufactured by Hitachi High-Tech Science Corporation). From the DSC curve obtained by the DSC measurement, the "melting point (2nd)" and the "melting enthalpy (2nd)" were determined by the same method as described in "Melting point and melting enthalpy" above.

In Comparative Example with a single polymer used instead of the sealant resin composition (X), similar DSC measurement was performed for the polymer.

[Tensile modulus (sealant resin composition)]

Using a single screw extruder of φ40 mm, various polymers were melt-kneaded under conditions of a melting

temperature of 210°C and a rotation speed of 40 to 50 rpm in proportion (parts by mass) shown in Tables 2-1 and 2-2, to give pellets. Using a hydraulic heat press molding machine set at 190°C, the sealant resin composition (X) obtained in the form of pellets was heated for 5 minutes, then molded under pressurization at 10 MPa for 2 minutes, and then cooled under pressurization at 20°C and 10 MPa for 4 minutes, to give a 2 mm-thick sheet (specimen). Here, in Comparative Example with a single polymer used instead of the sealant resin composition (X), pellets and sheets (specimens) were similarly prepared from the polymer.

After the molding, the specimen was stored at room temperature for 7 days or more, a dumbbell specimen specified in ASTM D638 (Type ASTM-No. 4) was then prepared from the sheet, and a tensile test was conducted on the dumbbell specimen in accordance with ASTM D638 (measurement temperature: 23°C, tension speed = 50 mm/min) to obtain a stress/strain curve, from which a tensile modulus (Young's modulus (YM)) was determined.

[Shore D hardness (sealant resin composition)]

Using a single screw extruder of φ40 mm, various polymers were melt-kneaded under conditions of a melting temperature of 210°C and a rotation speed of 40 to 50 rpm in proportion (parts by mass) shown in Tables 2-1 and 2-2, to give pellets. Using a hydraulic heat press molding machine set at 190°C, the sealant resin composition (X) obtained in the form of pellets was heated for 5 minutes, then molded under pressurization at 10 MPa for 2 minutes, and then cooled under pressurization at 20°C and 10 MPa for 4 minutes, to give a 2 mm-thick sheet (specimen). Here, in Comparative Example with a single polymer used instead of the sealant resin composition (X), pellets and sheets (specimens) were similarly prepared from the polymer.

After the molding, the specimen was stored at room temperature for 7 days, followed by measurement of the Shore D hardness.

[MFR (sealant resin composition)]

MFR was measured at 230°C and a load of 2.16 kg in accordance with ASTM D1238.

[Test for resistance to whitening]

Using a single screw extruder of φ40 mm, various polymers were melt-kneaded under conditions of a melting temperature of 210°C and a rotation speed of 40 to 50 rpm in proportion (parts by mass) shown in Tables 2-1, 2-2 and 3, to give pellets. Using a hydraulic heat press molding machine set at 190°C, the sealant resin composition (X) obtained in the form of pellets was heated for 5 minutes, then molded under pressurization at 10 MPa for 2 minutes, and then cooled under pressurization at 20°C and 10 MPa for 4 minutes, to give a 0.5 mm-thick sheet (specimen). Here, in Comparative Example with a single polymer used instead of the sealant resin composition (X), pellets and sheets (specimens) were similarly prepared from the polymer.

After the molding, the obtained sheet (specimen) was stored at room temperature for 7 days or more.

From the sheet, a dumbbell No. 2 specified in JIS K 6251 (dumbbell specimen of dumbbell No. 2) was produced, the color phase before extension (L value (before extension)) and the color phase of the dumbbell extended by 15 mm at a tension speed of 50 mm/min (L value (after extension)) were measured using a spectrophotometric colorimeter (CM-3700d manufactured by KONICA MINOLTA, INC.), and a color phase change ($\Delta L$) was calculated on the basis of the following equation.

A color phase change ($\Delta L$) was similarly calculated using a sheet which had been obtained by heat aging, at 85°C for 5 days, the above-mentioned obtained sheet.

The smaller the $\Delta L$ value, the better the resistance to whitening. Table 1 shows the results.

Evaluation criteria for resistance to whitening

$\Delta L$ = L value (after extension) - L value (before extension)

O: $\Delta L \leq 15$
X: $\Delta L \geq 16$

[Heat seal strength]

Using an extruder (φ40 mm), the polymers shown in Tables 2-1 and 2-2 were kneaded in proportion shown in Tables 2-1 and 2-2 (parts by mass), and the obtained pellets were extruded at 230°C using a cast film molding machine, to

give a 100 μm-thick single-layered unstretched film. A 25 μm-thick stretched PET film (manufactured by Toray Industries, Inc.) was laminated to the surface of the base material layer of the obtained unstretched film by a dry lamination method with an adhesive agent layer interposed therebetween, thereby producing a laminate (which may be hereinafter referred to as a "laminated film"). That is, the laminate comprises a layer composed of a sealant resin composition such as the sealant resin composition (X), an adhesive agent layer, and a base material layer composed of a stretched PET film, in this order, and the adhesive agent layer is in direct contact with the layer composed of a sealant resin composition and the base material layer composed of a stretched PET film. Using the laminate, evaluation was performed as described below.

<Heat seal (HS) strength (before heat aging)>

A 50 μm-thick Teflon (registered trademark) sheet, two laminated films obtained, and a 50 μm-thick Teflon (registered trademark) sheet were stacked in this order, to give a test material. Here, the two laminated films were stacked such that the surfaces including the layer composed of a sealant resin composition face each other.

The heat seal bars of a heating seal tester (manufactured by TESTER SANGYO CO,. LTD., TB-701B model) were adjusted to 15 mm in width and 300 mm in length, the temperature of the lower sealing bar was set to 70°C, the temperature of the upper sealing bar was set to 190°C, and the test material was held between the sealing bars, and heat-sealed at a pressure of 0.2 MPa for 1.0 second. Thereafter, the two Teflon (registered trademark) sheets were removed, to give a laminated film, and the laminated film was left to stand at 23°C for 1 day. The laminated film is slit to a width of 15 mm so as to include a heat-sealed portion, and non-heat-sealed portions were chucked in a tensile tester (manufactured by INTESCO co., ltd., IM-20ST). The maximum load was measured when the heat-sealed portion was peeled in a 180° direction at a rate of 300 mm/min. The measurement was performed five times, and the average value of maximum loads was defined as heat seal strength.

<Heat seal (HS) strength (after heat aging)>

The heat seal strength after heat aging was measured in the same manner as in the test of HS strength (before heat aging) except that a film which had been obtained by heat-aging, at 85°C for 5 days, the single-layered unstretched film prepared above was used instead of the single-layered unstretched film.

Evaluation Criteria of HS strength (after heat aging)

O: HS strength is 35 N/15 mm or more.
X: HS strength is less than 35 N/15 mm.

<Heat seal (HS) strength retention ratio>

From the HS strength before and after heat aging, the HS strength retention ratio was determined by the following equation. It can be said that the larger this value, the better the heat resistance. The HS strength retention was evaluated according to the following criteria on the basis of the HS strength retention ratio.

HS strength retention ratio (%) = 100 × HS strength (after heat aging)/HS strength (before heat aging)

Evaluation criteria of HS strength retention

O: HS strength retention ratio is 80% or more.
X: HS strength retention ratio is less than 80%.

Whether there was a change in appearance of the film surface before and after heat aging of the single-layered stretched film at 85°C for 5 days was evaluated.

O: No change in appearance
Δ: A bleeding component was generated on a part of the surface (a part of the surface was sticky).
X: A bleeding component was generated on the whole of the surface (the whole of the surface was sticky).

<Resistance to non-aqueous solvent>

For evaluating resistance to a non-aqueous solvent, evaluation was performed on the sealant resin composition as described below. Here, in the evaluation below, a mixed solvent of ethylene carbonate (EC) and diethyl carbonate

(DEC) was used as the non-aqueous solvent on the assumption of contact between a package for lithium ion batteries and an electrolytic solution when the sealant resin composition was used for the package.

Since the densities of ethylene carbonate (EC) and diethyl carbonate (DEC) are 1.32 g/$cm^3$ and 0.975/$cm^3$, respectively, the mass ratio of EC and DEC in a mixed solvent of EC and DEC at 1 : 1 (v/v) is about 58 : 42.

<Ratio of change in weight after immersion in non-aqueous solvent>

Using a single screw extruder of φ40 mm, various polymers were melt-kneaded under conditions of a melting temperature of 210°C and a rotation speed of 40 to 50 rpm in proportion (parts by mass) shown in Table 3, to give pellets. Using a hydraulic heat press molding machine set at 190°C, the sealant composition (X) obtained in the form of pellets was heated for 5 minutes, then molded under pressurization at 10 MPa for 2 minutes, and then cooled under pressurization at 20°C and 10 MPa for 4 minutes, to give a 0.3 mm-thick sheet (specimen). Here, in Comparative Example with a single polymer used instead of the sealant resin composition (X), pellets and sheets (specimens) were similarly prepared from the polymer.

A dumbbell ASTM 638-No. 4 was prepared from the 0.3 mm-thick sheet obtained by press molding, and immersed in ethylene carbonate (EC)/diethyl carbonate (DEC) = 1/1 (v/v%, manufactured by Kishida Chemical Co., Ltd., trade name: "EC : DEC (1 : 1 v/v%)") under conditions of 80°C and 24 hours. Thereafter, a ratio of change in weight was determined from the following equation.

Ratio of change in weight (%) = 100 × (weight after immersion - weight before immersion)/weight before immersion

In the case where the value of the ratio of change in weight is negative, the resin composition is dissolved in EC/DEC. In the case where the value of the ratio of change in weight is positive, the resin composition is swollen with EC/DEC.

Evaluation criteria for ratio of change in weight

O: The ratio of change in weight is -4.5% or more and 4.5% or less.
X: The ratio of change in weight is less than -4.5% or more than 4.5%.

<Mechanical properties after immersion in EC/DE>

A dumbbell ASTM-No. 4 was prepared from a 0.3 mm-thick sheet obtained by press molding, which is similar to that described in "Ratio of change in weight after immersion in non-aqueous solvent" above, and immersed in EC/DEC = 1/1 (v/v%, manufactured by Kishida Chemical Co., Ltd.) under conditions of 80°C and 24 hours. Thereafter, for the specimens before and after the immersion, the yield stress, the strength at break (TS), the elongation at break (chuck-to-chuck, EL) and the Young's modulus (YM) were measured in accordance with ASTM D638 (measurement temperature: 23°C, tension speed = 50 mm/min).

The Young's modulus (YM) retention ratio and the retention ratio of strength at break (TS) were measured from the following equation.

YM retention ratio (%) = 100 × Young's modulus after immersion/Young's modulus before immersion

TS retention ratio (%) = 100 × strength at break after immersion/strength at break before immersion

Evaluation criteria for YM retention ratio and TS retention ratio

O: The YM retention ratio and the TS retention ratio are 81% or more.
X: The YM retention ratio and the TS retention ratio are less than 81%.

[Properties and heat seal properties of sealant resin composition]

[Example A1]

A sealant resin composition was prepared by the above-described method using 10 parts by mass of the above-described 1-butene/ethylene copolymer (A-1) as the 1-butene/ethylene copolymer (A) and 90 parts by mass of the above-described (B-1) as the propylene-based polymer (B), and the properties of the sealant resin composition were then

measured by the above-described methods. Table 2-1 shows the properties obtained.

[Examples A2 to A9]

A sealant resin composition was prepared in the same manner as in Example A1 except that polymers shown in Tables 1 and 2-1 were used instead of the polymers for forming a sealant resin composition, which had been used in Example 1. The properties of the resulting sealant resin compositions were measured by the above-described methods. Table 2-1 shows the properties obtained.

[Comparative Examples a1 to a4]

A sealant resin composition was prepared in the same manner as in Example A1 except that polymers shown in Tables 1 and 2-2 were used instead of the polymers for forming a sealant resin composition, which had been used in Example 1. However, in Comparative Example a1, the random polypropylene (B-1) was directly used. The properties of the resulting sealant resin compositions or polymers were measured by the above-described methods. Table 2-2 shows the properties obtained.

[Table 2-1]

**Table 2-1**

| | | | | Example A1 | Example A2 | Example A3 | Example A4 | Example A5 |
|---|---|---|---|---|---|---|---|---|
| 1-Butene/ethylene copolymer (A) | A-1 | C2=14.6 mol% | mass% | 10 | | | | |
| | A-2 | C2=14.3 mol% | mass% | | 10 | | | |
| | A-3 | C2=12.2 mol% | mass% | | | 10 | | |
| | A-4 | C2=10.1 mol% | mass% | | | | 10 | |
| | A-5 | C2=8.1 mol% | mass% | | | | | 10 |
| | A-6 | C2=5.7 mol% | mass% | | | | | |
| Propylene-based polymer (B) | B-1 | rPP | mass% | 90 | 90 | 90 | 90 | 90 |
| Ethylene-based polymer (C) | C-1 | High-pressure low-density polyethylene | mass% | | | | | |
| | C-2 | Ethylene/propylene copolymer | mass% | | | | | |
| Other component | PER | C2-20.6 mol% | mass% | | | | | |
| Melting enthalpy (2nd) | | | J/g | 67 | - | 73 | 72 | 67 |
| Melting point (2nd) | | | °C | 138 | - | 139 | 139 | 138 |
| Tensile elastic modulus (Young's modulus (YM)) | | | MPa | 840 | 840 | 860 | 880 | 900 |
| Shore D hardness (maximum value) | | | - | 70.1 | 70.2 | 70.4 | 70.0 | 70.7 |
| MFR(230°C,2.16 kg) | | | g/10min | 7.0 | 6.4 | 7.0 | 7.0 | 7.0 |
| Resistance to whitening ($\Delta L$) | | | - | 9O | 10O | 10O | 10O | 11O |
| Heat seal strength | | | N/15 mm | 45.3 | 40.4 | 40.0 | 38.7 | 36.5 |
| Heat seal strength (80°C×after 5 days) | | | N/15 mm | 38.2O | 39.2O | 41.1O | 37.9O | 36.7O |
| Heat seal strength retention ratio | | | % | 84O | 97O | 103O | 98O | 101O |
| Appearance after heat aging | | | - | O | O | O | O | O |

Table 2-1 (continued)

| | | | | Example A6 | Example A7 | Example A8 | Example A9 |
|---|---|---|---|---|---|---|---|
| 1-Butene/ethylene copolymer (A) | A-1 | C2=14.6 mol% | mass% | | 10 | 20 | 30 |
| | A-2 | C2=14.3 mol% | mass% | | | | |
| | A-3 | C2=12.2 mol% | mass% | | | | |
| | A-4 | C2=10.1 mol% | mass% | | | | |
| | A-5 | C2=8.1 mol% | mass% | | | | |
| | A-6 | C2=5.7 mol% | mass% | 10 | | | |
| Propylene-based polymer (B) | B-1 | rPP | mass% | 90 | 85 | 65 | 55 |
| Ethylene-based polymer (C) | C-1 | High-pressure low-density polyethylene | mass% | | 5 | | |
| | C-2 | Ethylene/propylene copolymer | mass% | | | 15 | 15 |
| Other component | PER | C2-20.6 mol% | mass% | | | | |
| Melting enthalpy (2nd) | | | J/g | 63 | 73 | 52 | 47 |
| Melting point (2nd) | | | °C | 139 | 138 | 139 | 141 |
| Tensile elastic modulus (Young's modulus (YM)) | | | MPa | 930 | 790 | 480 | 340 |
| Shore D hardness (maximum value) | | | - | 71.0 | 69.4 | 60.6 | 57.6 |
| MFR(230°C,2.16 kg) | | | g/10min | 7.0 | 7.4 | 5.1 | 5.1 |
| Resistance to whitening (ΔL) | | | - | 13O | 9O | 7O | 6O |
| Heat seal strength | | | N/15 mm | 37.5 | 37.7 | 41.1 | 49.0 |
| Heat seal strength (80°C×after 5 days) | | | N/15 mm | 38.3O | 35.1O | 39.5O | 39.0O |
| Heat seal strength retention ratio | | | % | 102O | 93O | 96O | 80O |
| Appearance after heat aging | | | - | O | O | O | Δ |

[Table 2-2]

**Table 2-2**

| | | | | Comparative Example a1 | Comparative Example a2 | Comparative Example a3 | Comparative Example a4 |
|---|---|---|---|---|---|---|---|
| 1-Butene/ethylene copolymer (A) | A-1 | C2=14.6 mol% | mass% | | | | |
| | A-2 | C2=14.3 mol% | mass% | | | | |
| | A-3 | C2=12.2 mol% | mass% | | | | |
| | A-4 | C2=10.1 mol% | mass% | | | | |
| | A-5 | C2=8.1 mol% | mass% | | | | |
| | A-6 | C2=5.7 mol% | mass% | | | | |
| Propylene-based polymer (B) | B-1 | rPP | mass% | 100 | 80 | 85 | 55 |

(continued)

| | | | | Comparative Example a1 | Comparative Example a2 | Comparative Example a3 | Comparative Example a4 |
|---|---|---|---|---|---|---|---|
| Ethylene-based polymer (C) | C-1 | High-pressure low-density polyethylene | mass% | | | | |
| | C-2 | Ethylene/propylene copolymer | mass% | | | 15 | 15 |
| Other components | PE R | C2=20.6 mol% | mass% | | 20 | | 30 |
| Melting enthalpy (2nd) | | | J/g | 91 | - | - | - |
| Melting point (2nd) | | | °C | 139 | - | - | - |
| Tensile elastic modulus (Young's modulus (YM)) | | | MPa | 1210 | 830 | 1100 | 450 |
| Shore D hardness (maximum value) | | | - | 74.3 | 67.8 | 72.1 | 56.8 |
| MFR(230°C,2.16 kg) | | | g/10min | 7.0 | 5.9 | 5.1 | 3.9 |
| Resistance to whitening (ΔJ) | | | - | 18X | 28X | 48X | 35X |
| Heat seal strength | | | N/15 mm | - | 41.3 | 30.5 | 41.3 |
| Heat seal strength(85°C×after 5 days) | | | N/15 mm | - | 31.6X | 19.4 | 30.0 |
| Heat seal strength retention ratio | | | % | - | 77X | 64X | 73X |
| Appearance after heat aging | | | - | - | X | O | X |

[Properties of sealant resin composition after immersion in non-aqueous solvent]

[Examples B1, B10, B11, B8 and B9 and Comparative Examples b1 to b4]

In Examples B1, B8 and B9 and Comparative Examples b1 and b2 to b4, measurement of the ratio of change in weight by the method described in "Ratio of change in weight after immersion in non-aqueous solvent" above and measurement by the method described in "Mechanical properties after immersion in EC/DEC" above were performed for each of the sealant resin compositions obtained in Examples A1, A8 and A9, the polymer used in Comparative Example a1, and the sealant resin compositions obtained in Comparative Examples a2 to a4.

On the other hand, in Examples B10 and B11, a sealant resin composition was prepared in the same manner as in Example A1 except that polymers shown in Tables 1 and 3 were used instead of the polymers for forming a sealant resin composition, which had been used in Example A1. A test for resistance to whitening by the method described in "Test for resistance to whitening" above, measurement of the ratio of change in weight by the method described in "Ratio of change in weight after immersion in non-aqueous solvent" above and measurement by the method described in "Mechanical properties after immersion in EC/DEC" above were performed for each of the resulting sealant resin compositions.

Table 3 shows the properties obtained. The data of resistance to whitening for the sealant resin compositions obtained in Examples A1, A8 and A9, the polymer used in Comparative Example a1 and the sealant resin compositions obtained in Comparative Examples a2 to a4, which are shown in Tables 2-1 and 2-2 above, are also shown in Table 3 for reference.

[Table 3]

**Table 3**

| | | | | Example B1 | Example B10 | Example B11 | Example B8 | Example B9 |
|---|---|---|---|---|---|---|---|---|
| 1-Butene/ethylene copolymer (A) | A-1 | C2=14.6 mol% | mass% | 10 | 20 | | 20 | 30 |
| | A-6 | C2=5.7 mol% | mass% | | | 20 | | |
| Propylene-based polymer (B) | B-1 | rPP | mass% | 90 | 80 | 80 | 65 | 55 |
| Ethylene-based polymer (C) | C-2 | Ethylene/propylene copolymer | mass% | | | | 15 | 15 |
| Other components | PER | C2=20.5 mol% | mass% | | | | | |
| Ratio of change in weight after immersion in electrolytic solution | | | % | 3.4O | 3.7O | 4.0O | 4.4O | 4.5O |
| Mechanical properties after immersion in EC/DEC | | YM (before immersion) | MPa | 870 | 630 | 700 | 440 | 310 |
| | | YM (after immersion) | MPa | 710 | 540 | 590 | 360 | 250 |
| | | EL (before immersion) | % | 790 | 770 | 760 | 830 | 830 |
| | | EL (after immersion) | % | 810 | 830 | 840 | 840 | 870 |
| | | TS (before immersion) | MPa | 49.0 | 46.2 | 48.9 | 37.8 | 37.0 |
| | | TS (after immersion) | MPa | 47.5 | 41.4 | 43.1 | 34.3 | 32.5 |
| | | YM retention ratio | % | 82O | 86O | 84O | 82O | 81O |
| | | TS retention ratio | % | 97O | 90O | 88O | 91O | 88O |
| Resistance to whitening (ΔL) | | | - | 9O | 5O | 8O | 7O | 6O |

Table 3 (continued)

| | | | | Comparative Example b1 | Comparative Example b2 | Comparative Example b3 | Comparative Example b4 |
|---|---|---|---|---|---|---|---|
| 1-Butene/ethylene copolymer (A) | A-1 | C2=14.6 mol% | mass% | | | | |
| | A-6 | C2=5.7 mol% | mass% | | | | |
| Propylene-based polymer (B) | B-1 | rPP | mass% | 100 | 80 | 85 | 55 |
| Ethylene-based polymer (C) | C-2 | Ethylene/propylene copolymer | mass% | | | 15 | 15 |
| Other components | PER | C2=20.5 mol% | mass% | | 20 | | 30 |
| Ratio of change in weight after immersion in electrolytic solution | | | % | 3.2O | 4.6X | 4.1O | 5.7X |
| Mechanical properties after immersion in EC/-DEC | | YM (before immersion) | MPa | 1130 | 720 | 910 | 430 |
| | | YM (after immersion) | MPa | 960 | 560 | 680 | 290 |
| | | EL (before immersion) | % | 750 | 770 | 750 | 810 |
| | | EL (after immersion) | % | 770 | 820 | 760 | 840 |

| | | | | | | |
|---|---|---|---|---|---|---|
| | TS (before immersion) | MPa | 50.2 | 45.6 | 41.7 | 38.5 |
| | TS (after immersion) | MPa | 49.3 | 41.6 | 40.3 | 30.9 |
| | YM retention ratio | % | 85O | 78X | 75X | 67X |
| | TS retention ratio | % | 98O | 91O | 97O | 80X |
| Resistance to whitening (ΔL) | | - | 18X | 28X | 48X | 35X |

From the results of comparison of Examples B10 and B11 with Comparative Example b2 and results of comparison between Example B9 and Comparative Example b4, which are shown in Table 3, it can be seen that the sealant resin compositions of the present invention exhibit a smaller ratio of change in weight after immersion in a non-aqueous solvent, undergo a smaller decrease in Young's modulus after immersion in EC/DEC, and have higher resistance to whitening as compared to the compositions comprising a propylene/ethylene copolymer instead of the 1-butene/ethylene copolymer (A). From the results of comparison between Example B1 and Comparative Example b1, it can be seen that in the case where only random polypropylene is used instead of the sealant resin composition of the present invention, good properties after immersion in a non-aqueous solvent is obtained, but resistance to whitening is not sufficient.

## Claims

1. A sealant resin composition (X) comprising a 1-butene/ethylene copolymer (A) satisfying the following requirements (A1), (A2) and (A5), and a propylene-based polymer (B), the resin composition satisfying the following requirements (X1) and (X1-2):

   requirement (A1): having a content of constituent units (i) derived from 1-butene being in a range of 70 to 99.9 mol%, and a content of constituent units (ii) derived from ethylene being in a range of 0.1 to 30 mol%, provided that a total of the constituent units (i) and the constituent units (ii) is 100 mol%;
   requirement (A2): having an isotactic pentad fraction (mmmm) calculated by $^{13}$C-NMR being in a range of 80 to 99.9%;
   requirement (A5): having no observed melting peak during second temperature raising when, using a differential scanning calorimeter (DSC), the temperature is first lowered from 30°C to -70°C at a cooling rate of 20°C/min (first temperature lowering), then maintained at -70°C for 5 minutes, raised from -70°C to 200°C at a heating rate of 20°C/min (first temperature raising), maintained at 200°C for 10 minutes, then lowered to -70°C at a cooling rate of 20°C/min (second temperature lowering), maintained at -70°C for 1 minute, and then raised again from -70°C to 200°C at a heating rate of 20°C/min (the second temperature raising);
   requirement (X1): having a Shore D hardness measured in accordance with ASTM D2240 being in a range of 44 to 80; and
   requirement (X1-2): having a melt flow rate (MFR) measured at 230°C and a load of 2.16 kg in accordance with ASTM D1238 being in a range of 0.1 to 100 g/10 min.

2. The sealant resin composition (X) according to claim 1, satisfying the following requirement (X2):
   requirement (X2): having a melting enthalpy ΔHfus of in a range of 20 to 100 J/g when, using a differential scanning calorimeter (DSC), the temperature is first lowered from 30°C to -70°C at a cooling rate of 20°C/min (first temperature lowering), then maintained at -70°C for 5 minutes, raised from -70°C to 200°C at a heating rate of 20°C/min (first temperature raising), and maintained at 200°C for 10 minutes, and the temperature is then lowered to -70°C at a cooling rate of 20°C/min (second temperature lowering), maintained at -70°C for 1 minute, and then raised again from -70°C to 200°C at a heating rate of 20°C/min (second temperature raising).

3. The sealant resin composition (X) according to claim 1, comprising an ethylene-based polymer (C).

4. The sealant resin composition (X) according to claim 1, which satisfies the following requirement (X3):
   requirement (X3): having a content of the 1-butene/ethylene copolymer (A) being in a range of 1 to 50 mass%, a content of the propylene-based polymer (B) being in a range of 30 to 99 mass%, and a content of the ethylene-based polymer (C) being in a range of 0 to 20 mass%, provided that a total of the 1-butene/ethylene copolymer (A), the propylene-based polymer (B) and the ethylene-based polymer (C) is 100 mass%.

5. The sealant resin composition (X) according to claim 1, wherein the 1-butene/ethylene copolymer (A) satisfies the

following requirement (A3):
requirement (A3): having an intrinsic viscosity [η] in decalin solvent at 135°C being in a range of 0.7 to 4.0 dl/g.

**6.** The sealant resin composition (X) according to claim 1, wherein the propylene-based polymer (B) comprises one or more selected from the group consisting of a random copolymer and a block copolymer.

**7.** A single-layered or multi-layered sealant film, comprising at least one layer containing the sealant resin composition (X) according to claim 1.

**8.** A laminate comprising a layer of the sealant film according to claim 7 and at least one base material film selected from the group consisting of a polyolefin film, a polystyrene film, a polyester film, a polyamide film, a laminated film of a polyolefin and a gas barrier resin film, a metal foil, paper and a vapor deposition film, the base material film being laminated on the layer of the sealant film.

**9.** The laminate according to claim 8, wherein the layer of the sealant film and the base material film are bonded by a extrusion coating method, a thermal lamination method or a dry lamination method.

**10.** The laminate according to claim 8, wherein the base material film is an aluminum foil.

**11.** A package comprising the laminate according to claim 9 or 10.

**12.** An electrical storage device comprising the laminate according to claim 9 or 10.

**13.** A package for lithium ion batteries comprising the laminate according to claim 9 or 10.

**14.** An electrical storage device comprising a sealant resin composition (X),
the sealant resin composition (X) comprising a 1-butene/ethylene copolymer (A) and a propylene-based polymer (B), and satisfying the following requirement (X1):
requirement (X1): having a Shore D hardness measured in accordance with ASTM D2240 being in a range of 44 to 80.

**15.** The electrical storage device according to claim 14, which is a lithium ion battery.

## INTERNATIONAL SEARCH REPORT

International application No.
**PCT/JP2023/032399**

**A. CLASSIFICATION OF SUBJECT MATTER**

***C09K 3/10***(2006.01)i; ***B32B 27/32***(2006.01)i; ***C08F 210/16***(2006.01)i; ***C08J 5/18***(2006.01)i; ***C08L 23/08***(2006.01)i; ***C08L 23/10***(2006.01)i; ***H01M 50/105***(2021.01)i; ***H01M 50/119***(2021.01)i; ***H01M 50/121***(2021.01)i; ***H01M 50/124***(2021.01)i; ***H01M 50/131***(2021.01)i; ***H01M 50/134***(2021.01)i
FI: C09K3/10 Z; C08L23/08; C08F210/16; B32B27/32 103; H01M50/105; H01M50/124; H01M50/119; H01M50/121; H01M50/134; H01M50/131; C08L23/10; C08J5/18 CES

According to International Patent Classification (IPC) or to both national classification and IPC

**B. FIELDS SEARCHED**

Minimum documentation searched (classification system followed by classification symbols)

C09K3/10; B32B27/32; C08F210/16; C08J5/18; C08L23/08; C08L23/10; H01M50/105; H01M50/119; H01M50/121; H01M50/124; H01M50/131; H01M50/134

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | US 2015/0051350 A1 (BASELL POLIOLEFINE ITALIA S.R.L.) 19 February 2015 (2015-02-19)<br>claims, paragraphs [0019]-[0021], [0044], examples, etc. | 1-15 |
| A | JP 2014-500340 A (BASELL POLIOLEFINE ITALIA S.R.L.) 09 January 2014 (2014-01-09)<br>claims, paragraph [0063], examples, etc. | 1-15 |
| A | JP 2018-522784 A (BASELL POLIOLEFINE ITALIA S.R.L.) 16 August 2018 (2018-08-16)<br>claims, examples, etc. | 1-15 |
| A | JP 2013-157286 A (TOPPAN PRINTING CO., LTD.) 15 August 2013 (2013-08-15)<br>claims, examples, etc. | 1-15 |
| A | WO 2014/042249 A1 (MITSUI CHEMICALS, INC.) 20 March 2014 (2014-03-20)<br>claims, examples, etc. | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2023/032399**

**C. DOCUMENTS CONSIDERED TO BE RELEVANT**

| Category* | Citation of document, with indication, where appropriate, of the relevant passages | Relevant to claim No. |
|---|---|---|
| A | WO 1998/033850 A1 (TOSOH CORP.) 06 August 1998 (1998-08-06) claims, examples, etc. | 1-15 |
| A | WO 2017/213216 A1 (MITSUI CHEMICALS, INC.) 14 December 2017 (2017-12-14) claims, examples, etc. | 1-15 |
| P, X | WO 2022/191039 A1 (MITSUI CHEMICALS, INC.) 15 September 2022 (2022-09-15) claims, paragraphs [0135]-[0179], etc. | 1-15 |

Form PCT/ISA/210 (second sheet) (January 2015)

**INTERNATIONAL SEARCH REPORT**
**Information on patent family members**

International application No.
**PCT/JP2023/032399**

| Patent document cited in search report | Publication date (day/month/year) | Patent family member(s) | Publication date (day/month/year) |
|---|---|---|---|
| US 2015/0051350 A1 | 19 February 2015 | EP 2631271 A1<br>CN 104105754 A | |
| JP 2014-500340 A | 09 January 2014 | US 2013/0202836 A1<br>claims, paragraph [0127], examples, etc.<br>WO 2012/052429 A1<br>KR 10-2013-0129188 A<br>CN 103154176 A | |
| JP 2018-522784 A | 16 August 2018 | US 2018/0346621 A1<br>claims, examples, etc.<br>WO 2016/188982 A1<br>KR 10-2018-0002854 A<br>CN 107636064 A | |
| JP 2013-157286 A | 15 August 2013 | (Family: none) | |
| WO 2014/042249 A1 | 20 March 2014 | US 2015/0225623 A1<br>claims, examples, etc.<br>EP 2896651 A1<br>CN 104640925 A<br>KR 10-2015-0052176 A | |
| WO 1998/033850 A1 | 06 August 1998 | (Family: none) | |
| WO 2017/213216 A1 | 14 December 2017 | US 2019/0264014 A1<br>claims, examples, etc.<br>EP 3470461 A1<br>CN 109196039 A<br>KR 10-2019-0005933 A | |
| WO 2022/191039 A1 | 15 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03070788 A
- JP 2017504667 A
- JP H1501950 A
- JP 2004051676 A